Europäisches Patentamt

European Patent Office

Office européen des brevets

(11) Publication number: **0 497 291 A2**

## (12) EUROPEAN PATENT APPLICATION

(21) Application number: **92101388.4**

(22) Date of filing: **28.01.92**

(51) Int. Cl.⁵: **G11B 7/00, G11B 7/08**

(30) Priority: **30.01.91 JP 10251/91**

(43) Date of publication of application:
**05.08.92 Bulletin 92/32**

(84) Designated Contracting States:
**DE FR GB NL**

(71) Applicant: **HITACHI, LTD.**
**6, Kanda Surugadai 4-chome**
**Chiyoda-ku, Tokyo 101(JP)**

(72) Inventor: **Tsuboi, Nobuyoshi**
**2081, Ishigamitojuku, Tokaimura**
**Naka-gun, Ibaraki-ken(JP)**
Inventor: **Sato, Yoshio**
**3-15, Hanayamacho 1-chome**
**Hitachi-shi, Ibaraki-ken(JP)**
Inventor: **Minemura, Hiroyuki**
**32-6-40, Nishinarusawacho 1-chome**
**Hitachi-shi, Ibaraki-ken(JP)**
Inventor: **Sugita, Tatsuya**
**Yuho-ryo, 20-3, Ayukawacho 6-chome**
**Hitachi-shi, Ibaraki-ken(JP)**

Inventor: **Fushimi, Tetsuya**
**Yuho-ryo, 20-3, Ayukawacho 6-chome**
**Hitachi-shi, Ibaraki-ken(JP)**
Inventor: **Nihei, Hideki**
**847-17, Tenjinbayashicho**
**Hitachiota-shi, Ibaraki-ken(JP)**
Inventor: **Yasukawa, Saburo**
**1-20-13, Higashioshima**
**Katsuta-shi, Ibaraki-ken(JP)**
Inventor: **Shibanuma, Hideo**
**3258-1, Uchiboricho**
**Hitachiota-shi, Ibaraki-ken(JP)**
Inventor: **Sagawa, Akio**
**15-11, Hanayamacho 1-chome**
**Hitachi-shi, Ibaraki-ken(JP)**
Inventor: **Tajima, Fumio**
**1180-106, Ishihongo, Juocho**
**Taga-gun, Ibaraki-ken(JP)**

(74) Representative: **Patentanwälte Beetz - Timpe -**
**Siegfried - Schmitt-Fumian- Mayr**
**Steinsdorfstrasse 10**
**W-8000 München 22(DE)**

(54) **Optical disk memory apparatus.**

(57) An optical disk memory apparatus comprising, at least, a disk rotating mechanism (240) which drives and rotates an optical disk (140) set in the memory, an optical head (210) which projects a light beam on the optical disk and which detects reflected light from the optical disk, and head displacement means (300) including an actuator (310) for displacing the optical head. The disk rotating mechanism (240), the optical head (210) and the head displacement means (310) are arranged along a common plane. In addition, the actuator (310) is arranged at the rear of the optical head (210) with respect to a rotating shaft (241) of the disk rotating mechanism (240). Since the disk rotating mechanism (240), the optical head (210) and the head displacement means (310) are arranged in this order, the memory apparatus can be made structurally thinner. Further, it can be implemented in a card type structure.

EP 0 497 291 A2

EP 0 497 291 A2

# FIG. 1

2

BACKGROUND OF THE INVENTION

1. Field of the Invention

The present invention relates to an optical disk memory apparatus wherein an optical disk set therein is driven and rotated for subjecting the optical disk to at least one process among the recording, reproduction and erasing of information. More particularly, it relates to an optical disk memory apparatus which is reduced in size, especially its thickness.

2. Description of the Related Art

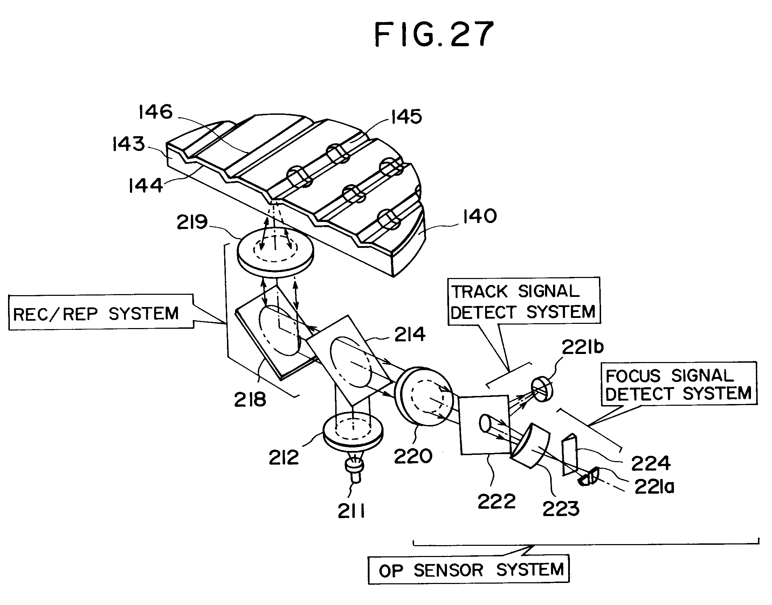

The optical system of an optical head in the prior art is, for example, as stated in "Nikkei Electronics" dated November 21, 1983, pp. 189-213. This optical system is constructed as shown in Fig. 27. Referring to the figure, a memory (hereinbelow, an optical disk 140 shall be exemplified) includes a substrate 143 and a recording film 144. The substrate 143 is formed with track guide grooves 146 having pitches of about 1.6$\mu$m, and pits 145 each having a diameter of about 0.8$\mu$m. The substrate 143 of the optical disk 140 has a thickness of about 1.2mm as a measure to counter the adhesion of dust to the recording film 144.

On the other hand, the optical head is configured of a semiconductor laser 211, a collimating lens 212 for forming a collimated beam, a beam splitter 214, a total reflection mirror 218 for turning an optical path, an objective lens 219 for condensing a light beam on to the disk 140, a detecting lens 220 for focusing a light beam from the beam splitter 214 on to an optical sensor system, a semitransparent mirror 222 for splitting the light beam toward a tracking signal detection system and a focusing signal detection system, a cylindrical lens 223 and an edge prism 224 for detecting a focusing signal, and respective sensors 221a and 221b for sensing a focusing error and for sensing a tracking error. The total reflection mirror 218 and the objective lens 219 constitute a recording/reproduction system.

In the optical system of such construction, a light beam emitted from the semiconductor laser 211 is reflected by the beam splitter 214 and is condensed on to the recording film 144 of the optical disk 140 by the objective lens 219. Subsequently, a light beam reflected from the optical disk 140 is transmitted through the beam splitter 214 and is measured as the focusing error signal by the sensor 221a. In the presence of the focusing error, a signal is feed back to an unshown actuator for driving the objective lens 219, thereby moving the position of this objective lens 219 to a focusing position. Besides, the sensor 221b senses the tracking error signal, on the basis of which the total reflection mirror 218 is rotated so that the condensed light beam may precisely track the track guide groove 146. In such a state, the prior art optical head records or reproduces an information signal while performing a focusing control and a tracking control.

In the recording mode, the laser beam at a power level of about 20 mW is emitted from the semiconductor laser 211 to produce the pits 145 in the recording film 144. On the other hand, in the mode of reproducing the signal, the laser beam at about 4 mW is emitted from the semiconductor laser 211 to read out the information in terms of the changes of reflection factors based on the presence or absence of the pits 145.

Recently, laptop computers and other portable systems for processing information have become thin in structure and enlarged in memory capacity. It has therefore become a requirement of memory apparatus for use in these systems to be thinned in structure and reduced in size. Also in the optical disk memory apparatus, accordingly, it has become necessary to thin the optical system and to thin constituent parts such as a disk motor and the head actuator for displacing the optical head. An expedient for thinning the optical disk is, for example, one proposed by some of the inventors of the present invention in Japanese Patent Application No. 321448/1989.

These known techniques have proposed a construction wherein the disk proper is built in a transparent case with the intention of thinning the optical disk, and the construction of the optical system for thinning the optical disk memory apparatus.

In this regard, the actuator which is used for displacing the head in the optical disk memory apparatus must simultaneously realize a quick access and a precise positioning operation. In the thinned optical disk memory apparatus, also such a head actuator needs to be structurally thin and to generate a predetermined thrust.

The head actuator in the prior art has often employed a scheme wherein a ball screw is rotated using a motor of small diameter, so as to move a slider in the radial direction thereof. With such a structure, however, the rotational motion must be converted into the linear motion, so that a complicated mechanism is necessitated, and a backlash etc. render precise positioning difficult. A further problem is that positioning control at high speed is difficult.

To the contrary, a structure wherein the actuator and the optical head are stacked is considered in order to directly convert the motion of the actuator into that of the optical head. With such a structure, the displacement of the actuator immediately turns into that of the optical head, so that the realization of the precise positioning at high speed can be expected. This expedient, however, has the problem of contravening the requirement for thinning the optical disk memory apparatus because the thicknesses of the actuator and the optical head lie one over the other.

Therefore, the individual constituent parts such as optical head and actuator are reduced in size. Also the reduction in the sizes of the constituent parts, however, has its limits as stated below.

With the aforementioned optical head in the prior art, the light is projected through the substrate 143 having the thickness of 1.2mm as shown in Fig. 27. Accordingly, even in a case where a light spot having a diameter on the order of 1$\mu$m is to be focused on the surface of the recording film 144, the light beam may form a light spot as large as about 1mm on the surface of the substrate 143. Accordingly, dust existing on the substrate surface is equivalent to noise of about 1/1000 on the recording film surface, and the degradation of the information signal attributed to the dust on the substrate surface is relieved reduced.

However, assuming the thickness of the substrate 143 to be 1.2mm (about 0.8mm in terms of an equivalent optical length), the surface oscillations of the disk 140 to be of ±1.0mm, and an allowance to be 0.2mm, the focal distance of the objective lens 219 becomes, at least, 4.0mm or so.

Meanwhile, the diameter d of the light spot which is formed at a focusing position on the surface of the recording film 144 is indicated by:

$$d = \lambda/NA$$

where

NA: numerical aperture (D/2f),
$\lambda$: wavelength of the light used,
D: effective diameter of the objective lens,
f: focal distance of the objective lens.

That is, the diameter d of the light spot condensed down to the limit of diffraction is inversely proportional to the numerical aperture NA. In other words, the light spot diameter d is inversely proportional to the lens diameter D and is proportional to the focal distance f. The objective lens for high-density recording needs to have an NA of 0.5 or above, so that the objective lens with an effective diameter which is equal to or greater than the focal distance thereof must be employed. Since the thickness of the optical disk memory apparatus including the optical head becomes somewhat greater than double the effective diameter of the objective lens, the thinned structure of the memory cannot be achieved without reducing this effective diameter as much as possible. Accordingly, it is first considered to reduce the effective diameter of the objective lens. As stated above, however, when the numerical aperture NA is to be set at 0.5 or above, the focal distance needs to be shortened conjointly.

Nevertheless, since very important potentially high security data is recorded on the optical disk 140, a spacing which prevents the optical disk 140 and the objective lens 219 from coming into contact is provided in the prior-art optical disk memory. Even in the memory apparatus with a short focal distance, therefore, the objective lens whose focal distance is 4mm or longer is used.

As to the aforementioned formula d = $\lambda$/NA, let's consider a case where the semiconductor laser 211 having an emission wavelength of 830 nm is employed for forming a light spot diameter of about 1.6$\mu$m and where the NA is set at 0.5 or above. Herein, when the objective lens 219 whose focal distance is 4mm is employed, the effective diameter thereof needs to be 4mm or greater. Besides, in order to efficiently utilize the NA of this objective lens, the light beam whose diameter is greater than the above effective diameter should be projected, and naturally the optical elements such as beam splitter 214 shown in Fig. 27 come to have still larger sizes. That is, once the effective diameter of the objective lens 219 has been determined, the sizes of the collimating lens 212 and other optical elements are determined accordingly. In this manner, on account of the limitation to the reduction of the diameter of the objective lens 219, it has been limited to thin the structure of the memory and reduce the size thereof.

Meanwhile, as the memories of the portable type information processing systems such as laptop computers, there have heretofore been used an IC card, a flexible disk, an optical card, etc. In this regard, with increases in the processing capabilities of the information processing systems, it has become necessary to deal with large quantities of information for instance picture data. Therefore, the IC memory, floppy disk and optical card in the prior art are of insufficient memory capacities, and a small-sized and large capacity memory is desired.

## SUMMARY OF THE INVENTION

An object of the present invention is to provide an optical disk memory apparatus which is reduced in size, especially thinned in structure, in such a way that a mechanism for rotating an optical disk, an optical head and means for displacing the optical head are optimally arranged without being structurally complicated.

Another object of the present invention is to provide an optical disk memory apparatus which realizes quick and precise positioning, in such a way that a mechanism for rotating an optical disk, an optical head and means for displacing the optical head are optimally arranged.

In order to accomplish the objects, according to an aspect of the present invention, there is provided an optical disk memory apparatus comprising, at least, a disk rotating mechanism which drives and rotates an optical disk set in the memory apparatus, an optical head which projects a light beam on to the optical disk and which detects reflected light from the optical disk, and head displacement means including an actuator for displacing the optical head in the disk rotating mechanism, the optical head and the head displacement means are arranged along a common plane, withe the actuator arranged at the rear of the optical head with respect to a rotating shaft of the disk rotating mechanism.

According to an aspect of the present invention, the optical disk memory apparatus should preferably comprise a case which contains the disk rotating mechanism, optical head and head displacement means.

As the previously mentioned common plane there is, for example, a virtual plane of rotation of the optical disk to be set; a base on which the disk rotating mechanism, optical head and head displacement means are arranged; or a base of the case which contains the disk rotating mechanism, optical head and head displacement means.

The disk rotating mechanism, optical head and head displacement means should preferably be arrayed in a vacant space whose height is a length of the disk rotating mechanism in a direction of the rotating shaft.

Besides, according to the present invention, the case can be formed with a slot in which an optical-disk memory unit can be detachably set, with the optical-disk memory unit encasing the optical disk in an envelope that is transparent at, at least, a light incidence part thereof.

The memory apparatus employs on optical head having an objective lens at a position at which it confronts the set optical disk. Memory apparatus should preferably have an actuator functioning to drive and displace the optical head so that the objective lens may move in a radial direction of the optical disk.

According to another aspect of the present invention, there is provided an optical disk memory apparatus comprising, besides the constituents in the foregoing aspects, a slot in which an optical-disk memory unit can be detachably set, encasing the optical disk in an envelope that is transparent at, at least, a light incidence part thereof. The optical disk includes a transparent substrate and a recording film. The optical head includes an objective lens at a position at which it confronts the set optical disk, and the objective lens has a focal distance with which the sum of a permissible displacement range of the objective lens and a total of the thickness of the transparent substrate of the set optical disk and the thickness of the light incidence part of the envelope becomes substantially equal to the distance from a front surface of the objective lens to a focusing position of the light beam.

The slot should preferably be capable of accommodating the optical-disk memory unit in which the total of the thickness of the transparent substrate of the set optical disk and the thickness of the light incidence part of the envelope is, at most, 1.2mm. The slot may well be capable of also accommodating optical disk memory unit which encases the optical disk in the card size envelope.

Preferably, the optical head includes an optical system which is located at a stage preceding the objective lens and which serves to enter a collimated beam into the objective lens, and a holder which supports the optical system. The optical system is high enough to transmit the light beam which has a beam width greater than an effective diameter of the objective lens. It is also preferable that the optical head has a height which is stipulated by the sum of the height of the optical system, the thickness of the objective lens, a permissible displacement width of the objective lens, and the thickness of the holder for supporting the optical system.

The actuator should preferably function to drive and displace the optical head so that the objective lens may move in a radial direction of the optical disk.

The disk rotating mechanism includes a motor which directly drives and rotates the optical disk, and has an external shape which is smaller than that of the optical disk. It is possible to employ a motor which is provided at its outer peripheral part with a portion whose distance from the center of the motor is shorter than the remaining portion of the outer peripheral part. In this case, the optical head is arranged in adjacency to the shorter portion.

The objective lens of the optical head should preferably have an effective diameter of 3.8mm or less. As a collimating lens, it is possible to employ, for example, one having a focal distance of 6.7mm or less.

The substrate thickness of 1.2mm in the prior-art disk is reduced, thereby shortening the necessary focal distance of the objective lens.

In operation, according to the present invention, the disk rotating mechanism, the optical head and the head displacement means are arranged along the common plane. These components cannot be made smaller than a certain size because mechanical parts are included and optical limitations are involved. The present invention therefore develops them in the plane, thereby preventing the thickness of the memory apparatus from increasing.

Herein, the disk rotating mechanism, the optical head, and the actuator of the head displacement means are arranged in this order, whereby the actuator can drive and displace the optical head from the rear side thereof with respect to the rotating shaft of the disk rotating mechanism. Accordingly, the mechanism for rotating the optical disk, the optical head, and the means for displacing the optical head can be optimally arranged without complicating their structures, and the optical disk memory apparatus can be reduced in size, especially in terms of thickness.

In addition, the optical head is located between the disk rotating mechanism and the actuator, and it is contrived so as to be displaced radially of the optical disk by the linear motion of the actuator. Accordingly, the optical head may merely be supported in a manner so as to be displaceable in the radial direction of the optical disk. Besides, since the magnitude of displacement may be controlled on the actuator side, the optical head can be displaced a predetermined magnitude by a simple structure and at high speed without employing a complicated mechanism such as a ball screw. Moreover, with such a structure, a linear motor can be used for the actuator, so that quick and precise positioning is realized.

As described above, the disk rotating mechanism, the optical head, and the actuator of the head displacement means are arranged in this order, whereby a vacant space for housing these constituents can be brought into the shape of a flat rectangular parallelepiped. Further, the constituents are arranged in a row, whereby the width of the memory can be reduced. Accordingly, when the width in a direction orthogonal to the displacement of the optical head is rendered less than the diameter of the optical disk to be set, the constituents can be housed in the case of the card type as a whole. Moreover, it suffices to hold planar geometries which are substantially equal to the dimensions of the optical-disk memory unit to be set. This leads to a reduction in the size of the optical disk memory apparatus and thinning the structure thereof. Consequently, when the optical disk memory apparatus is used as an independent apparatus, the portability thereof is enhanced. Besides, when the optical disk memory apparatus is mounted on any of computers, word processors, etc. of the laptop type and the notebook type, it does not obstruct thinning the structure of such an apparatus, and it can greatly contribute to increase in the memory capacity of such an apparatus.

BRIEF DESCRIPTION OF THE DRAWINGS

Fig. 1 is a plan view showing the outline of the construction of an embodiment of an optical disk memory apparatus according to the present invention;

Fig. 2 is an elevational view showing the outline of the construction of the first embodiment of the optical disk memory apparatus of the present invention;

Fig. 3 is a block diagram showing the outline of the construction of the first embodiment of the optical disk memory apparatus of the present invention, as well as the outline of the construction of an information processing system in which this optical disk memory apparatus is incorporated;

Figs. 4(a) and 4(b) are a partially cutaway elevational view and a plan view, respectively, showing the outline of the construction of an example of an optical head which is suitably applicable to the optical disk memory apparatus of the first embodiment of the present invention;

Figs. 5(a) and 5(b) are a plan view and an elevational view, respectively, showing an example of an optical system in the optical disk memory apparatus of the first embodiment of the present invention;

Fig. 6 is a perspective view showing the optical arrangement relationship between an optical disk and the optical head in the first embodiment of the present invention;

Figs. 7(a) and 7(b) are a plan view and a B-B sectional view, respectively, showing the construction of an embodiment of an optical-disk memory unit which is applied to the optical disk memory apparatus of the present invention;

Fig. 8 is a perspective view showing an example of an optical element module which is suitably applicable to the optical disk memory apparatus of the present invention;

Fig. 9 is a perspective view showing an example of a prism in which a shaping prism is combined with a rectangular prism forming part of a beam splitter, within a compound prism which constitutes the optical element module shown in Fig. 8;

Fig. 10 is a perspective view showing an example of the rectangular prism forming the beam splitter part, within the compound prism which constitutes the optical element module shown in Fig. 8;

Fig. 11 is a perspective view showing an example of a total reflection mirror, within the compound prism which constitutes the optical element module shown in Fig. 8;

Fig. 12 is an explanatory view exemplifying thicknesses which concern the optical disk memory apparatus of the first embodiment of the present invention;

Fig. 13 is a graph showing the relationship between the effective diameter of an objective lens and the height of an optical disk drive;

Fig. 14 is an explanatory view with essential portions in section, showing the relationship between the optical-disk memory unit and the optical head of the optical disk memory apparatus of the present invention;

Fig. 15 is an explanatory view with essential portions in section, showing the relationship between another embodiment of the optical-disk memory unit and the optical head of the optical disk memory apparatus of the present invention;

Fig. 16 is a block diagram showing the construction of an embodiment of a drive circuit loop for use in the embodiment of the optical disk memory apparatus of the present invention;

Fig. 17 is an explanatory diagram of a laser power modulating method in the overwrite mode of a semiconductor laser for use in the embodiment of the optical disk memory apparatus of the present invention;

Fig. 18 is a perspective view for elucidating the operating principle of an optical head driving actuator;

Fig. 19 is a waveform diagram showing the operation of the optical head driving actuator;

Fig. 20 is a block diagram showing an example of the control circuit of the optical head driving actuator;

Fig. 21 is a diagram of the pattern of the velocity command of the optical head driving actuator, versus the position command thereof;

Fig. 22 is a block diagram showing an example of the current command circuit of the optical head driving actuator;

Fig. 23 is a perspective view showing the outline of the construction of another embodiment of the optical disk memory apparatus of the present invention;

Fig. 24 is a transverse sectional view showing another embodiment of a motor which can be used for rotating the optical disk in the present invention;

Fig. 25 is a vertical sectional view of the motor shown in Fig. 24;

Fig. 26 is an optical path diagram showing the outline of the construction of another embodiment of the optical head in the present invention;

Fig. 27 is an optical path diagram showing the outline of the construction of an optical disk memory apparatus in the prior art; and

Fig. 28 is a plan view showing the outline of the construction of another embodiment of the optical disk memory apparatus of the present invention.

## DETAILED DESCRIPTION OF THE PREFERRED EMBODIMENTS

Now, embodiments of an optical disk memory apparatus according to the present invention will be described with reference to the drawings. It is needless to say that the present invention is not restricted to the embodiments which with be mentioned below.

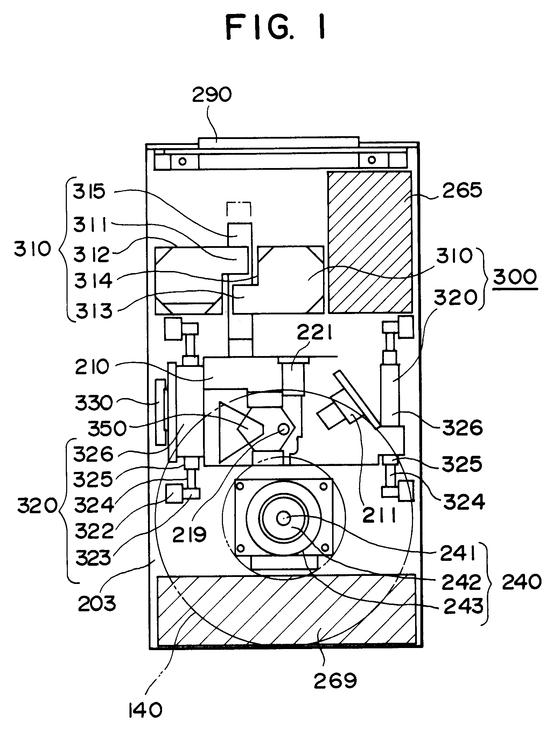

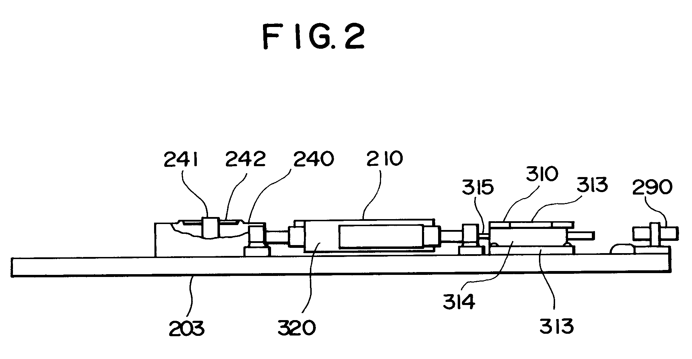

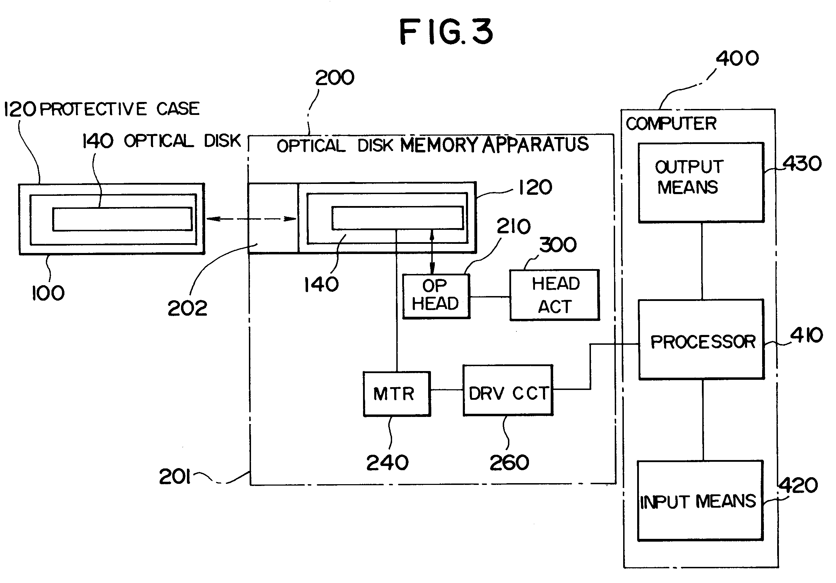

Figs. 1 and 2 show the outline of the construction of the first embodiment of the optical disk memory apparatus of the present invention. In addition, Fig. 3 shows the general construction of the optical disk memory apparatus of the present invention and the construction of an example of an information processing system which incorporates this optical disk memory apparatus.

The optical disk memory apparatus in this embodiment comprises as its major constituents a disk motor 240 for rotating an optical disk 1 40 indicated by a phantom line, an optical head 210 for projecting the light of a semiconductor laser 211 on to the recording surface of the optical disk 140 and for detecting reflected light, head displacement means 300 including a head actuator 310 for driving the optical head 210 in the radial direction of the optical disk 140, and a drive circuit 260 for controlling the operation of the optical head 210 and the rotation of the disk motor 240.

These constituents are housed in a case 201. This case is provided with a card holding portion or slot 202 for detachably holding an optical-disk memory unit (hereinbelow, sometimes called an "optical disk in card" ) 100. The disk motor 240, optical head 210 and head actuator 310 are arranged along a substantially common plane, here along the casing base 203, in the order mentioned. Some or of all of the constituent elements of the drive circuit 260 for controlling the operation of the optical head 210 and the rotation of the disk motor 240 are arranged in the unoccupied part of the base 203. In this embodiment, by way of example a motor controller 269 and a light detection signal amplifier (preamplifier) 265, which amplifies a detection signal delivered from the optical head 210, are arranged in the base though they are shown merely as arrangement regions (in hatching) in Fig. 1. Also, a connector 290 is disposed at one end of the case base 203. This connector 290 is used for, for example, the interconnections among the constituent elements of the drive circuit 260.

The optical disk memory apparatus 200 of this embodiment can be employed for building an information processing system in connection with a computer 400. By way of example, the computer 400 includes a processor 410, input means 420 and output means 430 as shown in Fig. 3. In connecting the optical disk memory apparatus 200 with the computer 400, the former can be built in the housing of the latter. The memory apparatus 200 can also be connected without being built in. As will be described later, the optical disk memory apparatus of the present invention can be formed into a very thin structure. Therefore, it is well suited to being built into a thin type computer such as a laptop or notebook type computer, and it can play a large part in making the computer thinner.

The optical head 210 includes the semiconductor laser 211, optical elements such as lenses and prisms which are not shown in Fig. 1, an objective lens 219, an objective lens actuator 350, and a photodetector 221 . These elements are arranged on a common base . In addition, as will be described later, the optical head 210 is supported by a head supporter 320 so as to be wholly displaceable. The objective lens 21 9 is located at a position at which it is displaced in the radial direction of the optical disk 140. Thus, the optical head 210 can move radially from the center of the disk motor 240. This is due to the fact that the actuator of the objective lens 219 is fabricated so as to be movable in a direction perpendicular to the track of the disk 140 for the purpose of tracking. The details of the optical head 210 will be described later.

The head displacement means 300 includes the head actuator 310, the head supporter 320 by which the optical head 210 is displaceably supported, and a displacement sensor 330 which detects the displacement position of the optical head 210 .

The head actuator 310 is constructed including one set of fixed coils 312, 314; yokes 311, 313 which are mounted on the fixed coils; a movable element 315 which is extended in to the space in between the yokes 311 and between the yokes 313; and a coil driving circuit which is not shown. The fixed coils 312, 314 are driven by the coil driving circuit so as to form sinusoidal magnetic fluxes (A-phase flux, B-phase flux) whose phases are shifted by 90 degrees. Each of the yokes 311, 313 is provided with a plurality of magnetic poles at regular intervals. Thus, when energized by the corresponding coils 312, 314, the yokes 311, and 313, form magnetic paths with the movable element 315 held therebetween. The movable element 315 is provided in its lengthwise direction (displacement direction) with magnetic pole rows in each of which a plurality of permanent magnets are arrayed at regular intervals. Owing to such a construction, the head actuator 310 can operate as a linear motor. A similar operating principle will be elucidated later though in relation to an actuator with a different structure. Incidentally, a technique relevant to such a linear motor is stated in, for example, the official gazette of Japanese Patent Application Laid-open No. 174262/1989.

The head actuator 310 in this embodiment is such that the yokes 311 and the fixed coil 312, and the yokes 313 and the fixed coil 314 are arranged in a direction orthogonal to the movable element 315 while holding this movable element therebetween. In addition, the yokes 311 and 313 have protruding parts on the sides which adjoin each other. The protrusions are adjacently located so as to fill up the other non protruding parts of the opposite yokes, and they form the magnetic pole rows of a stator side along the movable element 315. The fixed coils 312, 314 afford a moving magnetic field.

According to such an arrangement, the coils 312, 314 are not arranged in a row in the lengthwise direction of the case base 203, and hence, this base can be shortened. Moreover, since the pole forming parts of the yokes 311, 313 are complementarily protrusive as stated before, it is possible to reduce the length of both the coils in the arrayal direction thereof, that is, the arrayal length thereof in the direction perpendicular to the displacement direction of the optical head 210. Accordingly, an efficient arrangement can be realized in a limited planar region. Thus, it is possible to make the external shape of the optical disk memory apparatus 200 smaller. Even when the size of the memory apparatus 200 is not reduced, circuit elements etc. can be arranged in the empty region, and the space factor of the memory apparatus 200 as a whole can be enhanced .

By the way, it is also possible to array the coils 312, 314 in the lengthwise direction of the case base 203.

Besides, in this head actuator 310, the movable element 315 is located so that the thrust acts substantially centrally of the optical head 210.

The head supporter 320 includes two supporting rods 324, 324 which are arranged in parallel in the displacement direction of the optical head 210; bearing portions 325 so as to freely slide and to support the optical head 210. Each of the supporting rods 324 is mounted afloat over the case base 203 by a fixing piece 322 for supporting the optical head 210 is installed so that the interspace between the optical head 210 and the disk 140 set therein may be held substantially constant.

The displacement sensor 330 is constructed of, for example, a linear encoder, and it detects the displacement of the bearing 326, thereby detecting thee position of the optical head 210. Also in order to detect the absolute position, the sensor 303 is precisely mounted so as to keep a constant gap relative to the optical head 210.

The disk motor 240 includes a rotating shaft 241, and a disk supporter 242 which surrounds the upper part of the shaft 241. These constituents appear on the upper surface of a case 243 which is fixed to the base 203. Herein, the optical disk 140 is supported by the disk supporter 242, and it is rotated by the rotating shaft 241. As the motor 240, the thinnest possible one is used. In this embodiment, the thickness of the motor 240 is in the order of that of the optical head 210.

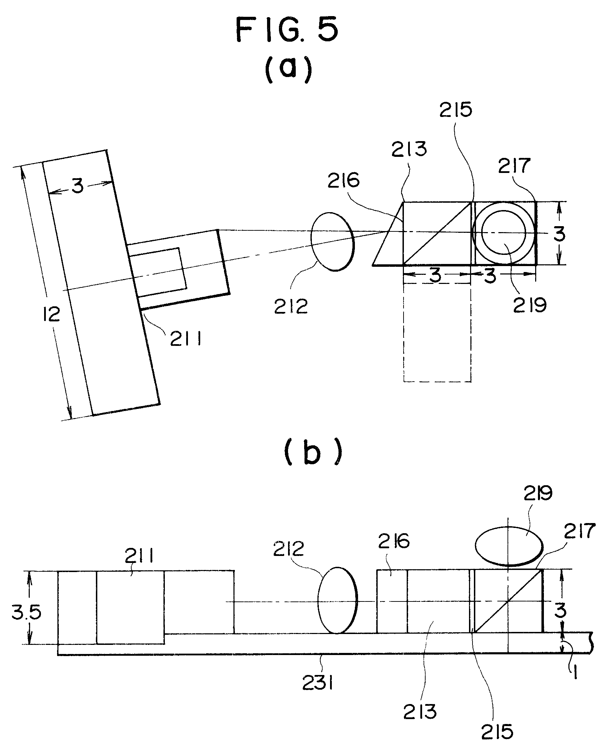

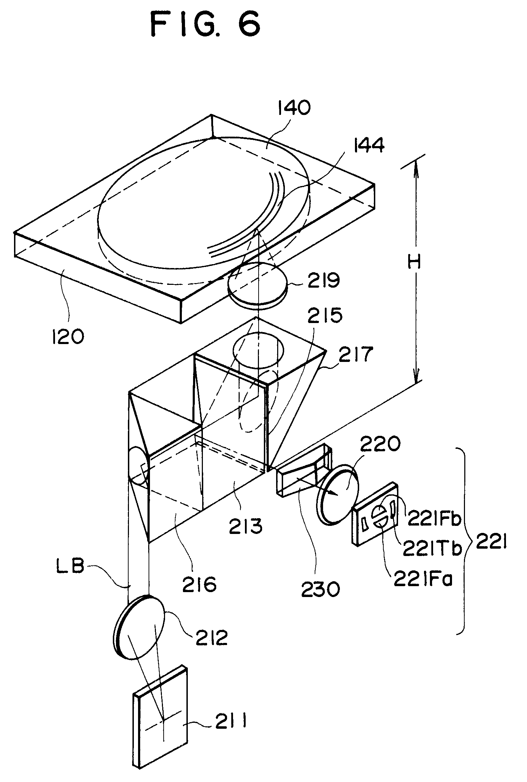

As shown in Figs. 5(a) and 5(b) by way of example, the optical head 210 includes the semiconductor laser 211, a collimating lens 212, a shaping prism 216, a polarizing beam splitter 213, a quarter wave plate 215, and a raising mirror of total reflection 217. These constituents are arranged on an optical head holder 231. The objective lens 219 is arranged over the total reflection mirror 217. As shown in Fig. 6, the optical disk 140 received in a protective case or envelope 120 is placed over the objective lens 219. Thus, the objective lens 219 irradiates the optical disk 140 with the light emitted from the semiconductor laser 211, and it condenses the reflected light from the optical disk 140 and directs the condensed light into the total reflection mirror 217. As shown in Fig. 6, a Foucault prism 230, a detecting lens 220 and the photodetector 221 are arranged as a signal detecting system which detects the reflected light split by the polarizing beam splitter 213. The optical system including also the photodetector 221 is collectively arranged on the optical head holder 231 as shown in Fig. S(b) by way of example.

The shaping prism 216, polarizing beam splitter 213, quarter wave plate 215 and total reflection mirror 217 can be unitarily configured into a compound prism 232. The semiconductor laser 211 needs to be mounted at a precise relative mounting angle for the purposes of shaping the light beam for the compound prism 232 and setting an optic axis normal to the disk 140. When the NA value of the collimating lens 212 is enlarged in order to efficiently utilize the diffusing light of the semiconductor laser 211, the relative position of the semiconductor laser 211 and the collimating lens 212 needs to be precisely set. Therefore, that part of the optical system which extends from the shaping prism 216 to the total reflection mirror 217 is unitarily formed as the compound prism 232, whereby the optic axis deviation of the optical system except the semiconductor laser 211 and the detecting system is made almost null. Moreover, in order to reduce the size of/not only the optical head 210, but also the rotating system of the optical disk in card, the semiconductor laser 211 and the photodetector 221 are so contrived that the wiring lines thereof are laid in an identical direction.

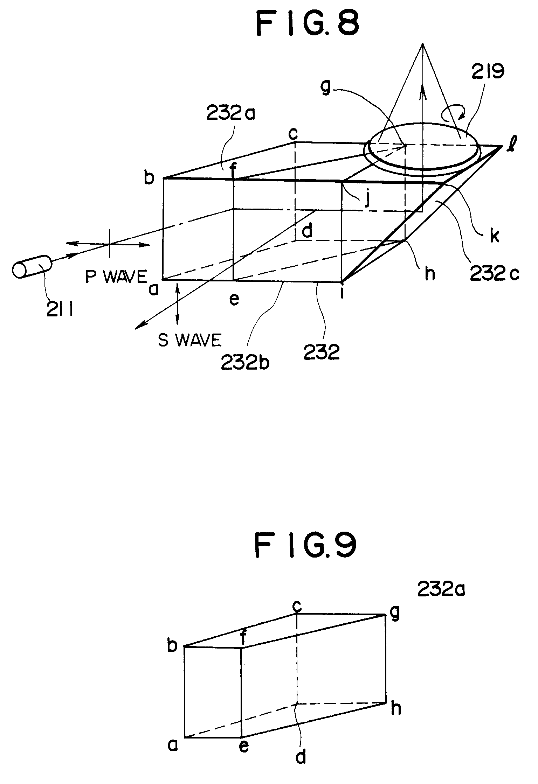

Fig. 8 shows an example of an optical element module which is well suited for use in the optical disk memory apparatus of the present invention. In Fig. 8, the detecting system of the optical system shown in Fig. 6 is omitted from the illustration, and the compound prism 232, semiconductor laser 211 and objective lens 219 are illustrated at a different visual angle. The vertices of elements made of optical glass are indicated by letters a-l in order to explain the optical system from the shaping prism to the total reflection mirror which chiefly constitute the compound prism 232.

Fig. 9 shows that first module unit 232a of the compound prism 232 constructing the optical element module in which the shaping prism 216 and a prism forming part of the beam splitter 213 are combined. The unit 232a is unitarily molded. The elliptical light beam emitted from the semiconductor laser 211 enters the face a-b-c-d of the first module unit 232a, and is refracted into a substantially circular beam. This light beam falls on the face e-f-g-h of the unit 232a forming a polarizing film, at an incidence angle of 45 degrees, whereupon it is mostly transmitted through the unit 232a. This operation is based on the contrivance that the semiconductor laser 211 emitting the linear polarization is set so as to afford the P polarization on the face e-f-g-h, and that the face e-f-g-h is formed with the film serving as the polarizing beam splitter 213. The face a-b-c-d should preferably be formed with an antireflection coating because the laser beam is incident thereon at a wide angle of approximately 72 degrees.

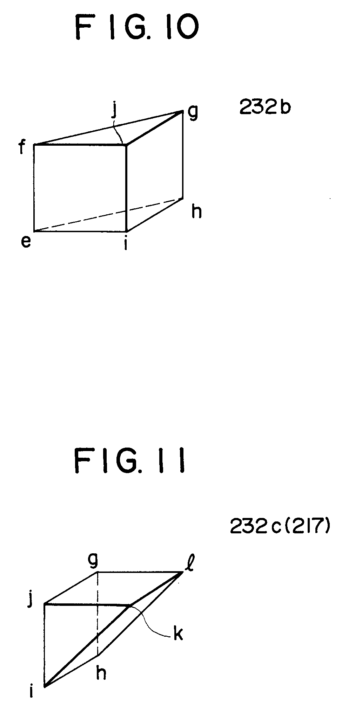

Fig. 10 shows that second module unit 232b of the compound prism 232 constructing the optical element module which forms the remaining part of the beam splitter 213. The second module unit 232b is a prism which is in the shape of an isosceles triangle pole, and whose face e-f-g-h is joined with the face e-f-g-h in Fig. 9. The light beam enters the face e-f-g-h of the unit 232b at an angle of 45 degrees, and is transmitted through the quarter-wave plate 215 formed on the face i-j-g-h of this unit. Thus, the light beam is turned from the P polarization into a circular polarization.

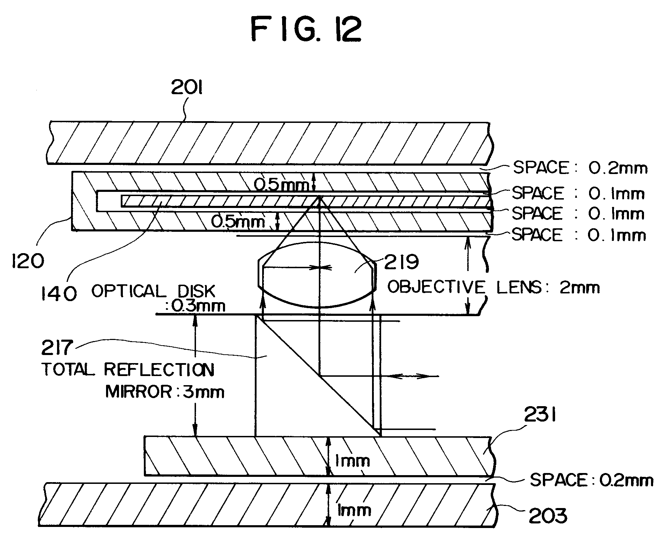

Fig. 11 shows the third module unit 232c of the compound prism 232 constituting the module shown in Fig. 8. The unit 232c is a prism in the shape of an isosceles triangle pole, and it forms the beam raising mirror of total reflection 217. The face j-g-h-i of this unit 232c is joined with the face j-g-h-i of the unit 232b in Fig. 10. The light beam enters the face j-g-h-i of the unit 232c normally and is reflected by the face k-l-h-i thereof, whereupon the reflected light is transmitted through the face j-g-l-k of this unit normally. The light transmitted through the face j-g-l-k enters the objective lens 219, and is condensed onto the surface of the recording film of the disk 140. Subsequently, reflected light from the disk surface is turned by the objective lens 219 into a collimated light beam, which retrocedes to the face j-g-l-k. Therefore, this face j-g-l-k should preferably be formed with an antireflection coating.

Here, the prisms 232b and 232c having the aforementioned shape as shown in Figs. 10 and 11 can also be joined without interposing the quarter-wave plate 215 therebetween as in the expedient stated above. On this occasion, the quarter wave plate 215 is provided on the face j-g-l-k. Besides, unlike the joining expedient, it is possible to prepare a metal mold which corresponds to the shape of the joined prisms, from the beginning, and to fabricate the assembly of the second and third module units 232b, 232c by the use of a press.

Such optical systems have heretofore been used in various combinations, but a feature of the optical head in the present invention is that, owing to reduced size and weight, the photodetector 221 is arranged on the same side as the semiconductor laser 211 as illustrated in Fig. 6. The foregoing module units (blocks) in Figs. 9 thru 11 can be fabricated very precisely using present-day machining techniques. The compound prism 232 having the four functions of the beam shaping prism, polarizing beam splitter, quarter wave plate and total reflection mirror as shown in Fig. 8 can be realized by joining the high precision module units into the unitary structure. This compound prism 232 has the merits that the size thereof is small and that the optic axis thereof hardly inclines.

The photodetector 221 has effective photodetector parts or elements which are distributably arranged in the four places of upper, lower, right and left. Two of them are the photodetector elements 221Ta, 221Tb with make up a tracking servo control, while the remaining two are the photodetector elements 221Fa, 221Fb constituting a focusing servo control.

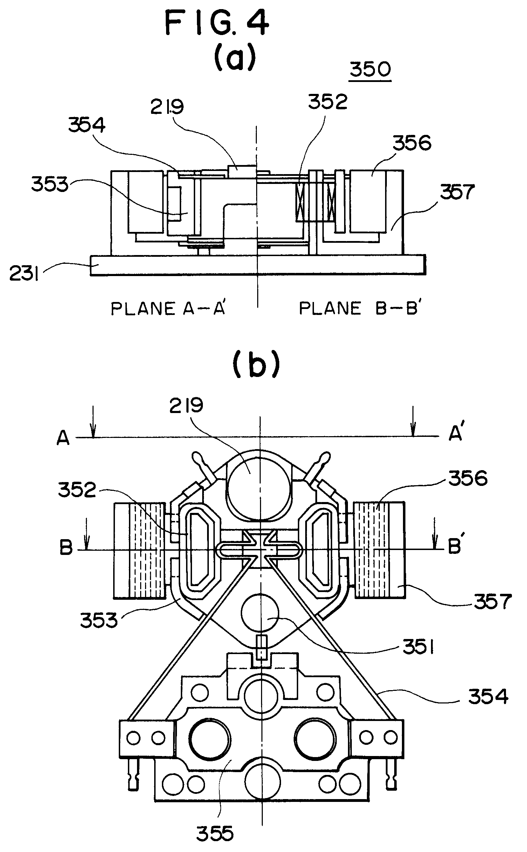

Figs. 4(a) and 4(b) are a partial sectional view and a plan view, respectively, showing the structure of an example of the objective lens actuator in the present invention. The sectional view of Fig. 4(a) is taken along a plane A-A' as well as a plane B-B' indicated in Fig. 4(b).

Referring to Figs. 4(a) and 4(b), the actuator 350 for the objective lens 219 includes a counterweight 351, two focusing coils 352, and four tracking coils 353 as moving parts. The moving parts are held by two, upper and lower sets of springs 354 each of which is protruded from a supporter 355 in cantilever fashion. The counterweight 351 is substantially as heavy as the objective lens 219. The centers of gravities of the moving parts and the objective lens 219, the centers of rotations thereof, and the supporting center of the springs 354 are coaxially arranged.

In addition, the objective lens actuator 350 includes a magnetic circuit, which is configured of a magnet 356 and a yoke 357. This magnetic circuit is so contrived that a magnetic flux from the magnet 356 penetrates the focusing coils 352 and the tracking coils 353.

The thrusts of the objective lens actuator 350 are electromagnetic forces which are respectively generated by causing currents to flow through the focusing coils 352 and the tracking coils 353. The two thrusts move the moving parts independently of each other. That is, the focusing control and the tracking control can be respectively performed by the motion of the moving parts in a direction perpendicular to the sheet of the drawing as seen in Fig. 4(b) and by the turning motion thereof around the supporting center of the springs 354.

Regarding a two dimensional actuator of small size such as the illustrated actuator, even when a flexible cable or the like is employed for power feed, the influences of the rigidity and weight thereof on the motion of the two-dimensional actuator are not negligible, and they are liable to hamper a smooth motion and to spoil responsiveness. In the construction of this embodiment, conductor leaves of, for example, phosphor bronze material are employed as the springs 354, so that two of the four springs 354 can be used for feeding electric power to each set of coils. The two-dimensional actuator in this embodiment is mounted on the optical head holder 231 of the optical head 210. The springs 354 can be formed using a photolithographic process.

Here, in the case where an aspheric objective lens of glass having an effective beam diameter of 2mm is employed as the objective lens 219, the weight thereof is about 70 mg., and the gross weight of the moving parts together with this objective lens becomes about 0.64 gr. When each of the springs 354 is formed of a phosphor bronze leaf with a thickness is $60\mu m$, width of $90\mu m$ and length from the supporter 355 to the supporting center of 10mm, the resonant frequency of the actuator 350 in the focusing direction becomes 23 Hz, and the resonant frequency thereof in the tracking direction becomes 45 Hz. A polyurethane-coated conductor having a diameter of 80mm is employed as the material of the coils, and the number of turns of each focusing coil 352 is set at 90, while the number of turns of each tracking coil 353 is set at 50. Then, the resistance of the focusing coils 352 connected in series and that of the tracking coils 353 connected in series becomes 10Ω and 8Ω, respectively. On this occasion, the thickness of the actuator 350 can be set at 5mm, which is about 1/2 of the thickness of an actuator in the prior art.

The acceleration sensitivity of the actuator having such a construction reaches, at least, 40 G/A (where G denotes the gravitational acceleration) in both the focusing direction and the tracking direction, and the maximum acceleration reaches, at least, 7G in both the directions. With the optical head 210 in which this actuator 350 is installed, the focusing and tracking controls can be performed while the optical disk 140 having a diameter of 130mm is being rotated at a high speed of 3600 r.p.m. or above. Moreover, a supply voltage for driving the actuator 350 may be about 2V, and power consumption is low. Therefore, this actuator can be satisfactorily driven even by a dry element battery, and it is also suited for application to a portable optical disk memory apparatus.

In accordance with a command from the processor 410, the drive circuit 260 controls the rotational frequency of the motor 240 and fulfills the function of modulating data to be recorded or erased or demodulating data to be reproduced. Besides, in accordance with a command from the input means 420, the processor 410 executes calculation processing or the operation of recording, reproducing or erasing information onto or from the optical disk 140. If necessary, it delivers the information recorded on the optical disk 140 or a calculated result through the output means 430.

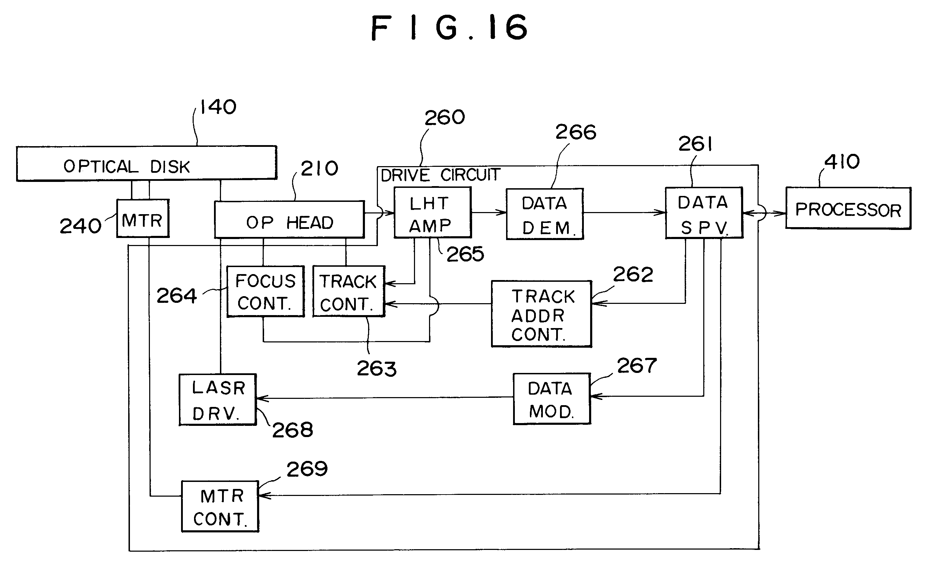

As shown in Fig. 16 by way of example, the drive circuit 260 includes a data supervisor 261, a track address controller 262, a tracking controller 263, a focusing controller 264, a light detecting amplifier 265, a data demodulator 266, a data modulator 267, a laser drive 268 and a motor controller 269.

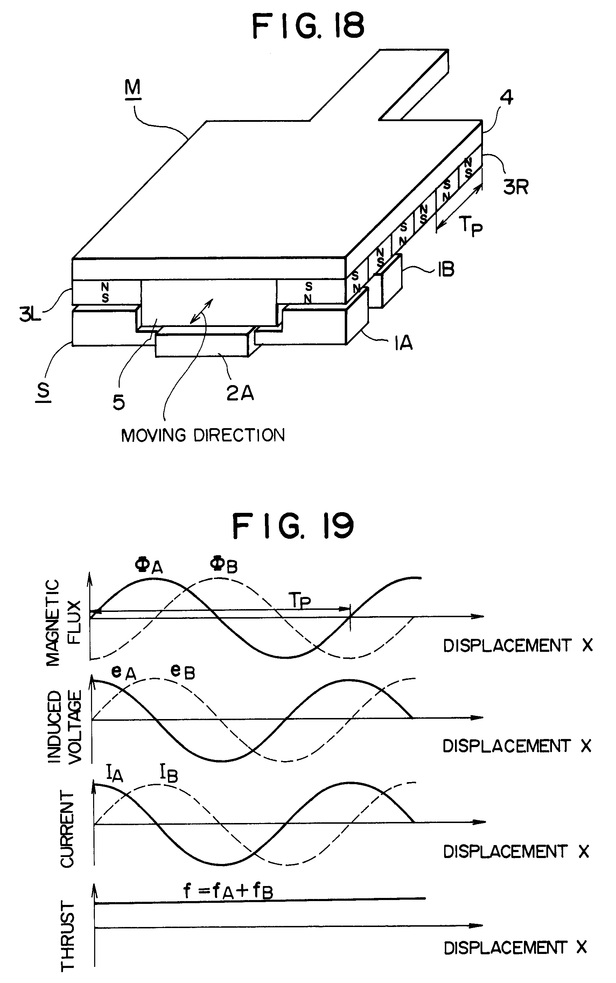

With such a circuit arrangement, in the mode of recording or erasing data, a pertinent track address is determined by the track address controller 262. The data modulator 267 converts the data given by the processor 410 into a pattern of "0" and "1" to be recorded onto or erased from the optical disk 140 in accordance with a specified modulation method. Modulation methods include the 2-7 modulation, the 4-15 modulation, etc., which can be properly used depending upon information processing systems. The laser drive 268 modulates the power of the laser 211 between erase power and recording power as shown in Fig. 17, in conformity with the logic levels "0" and "1" determined by the data modulator 267.

In the mode of reproducing data, an appointed drive address is selected by the processor 410, the reflection factor of the optical disk 140 is read out by the light detecting amplifier 265 with the laser power held constant at a value of about 1-2 mW as shown in Fig. 17, and the data is demodulated by the data demodulator 266.

The resulting signal of the light detecting amplifier 265 is also utilized as the signals of the tracking controller 263 and the focusing controller 264. The functions of these loops can be realized by functions which have heretofore been employed in the memories of information processing systems represented by a compact disk. In addition, the motor controller 269 controls the rotational frequency of the motor 240 for rotating the optical disk 140.

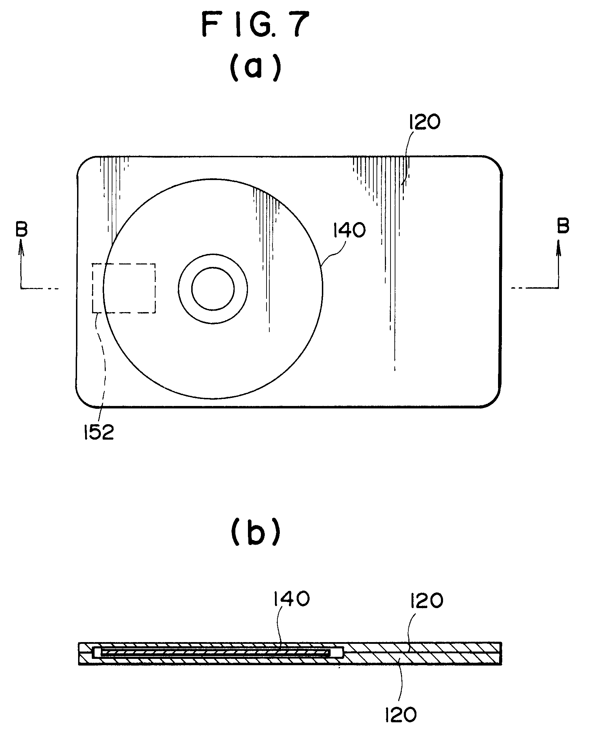

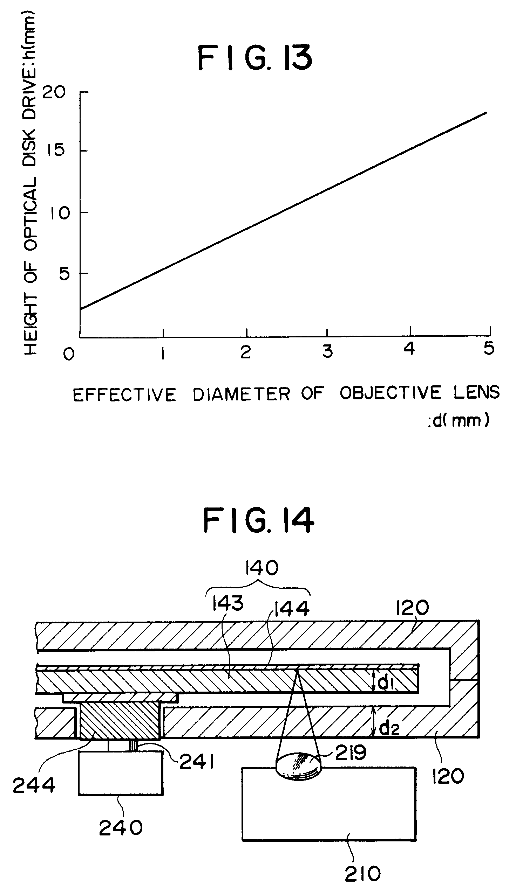

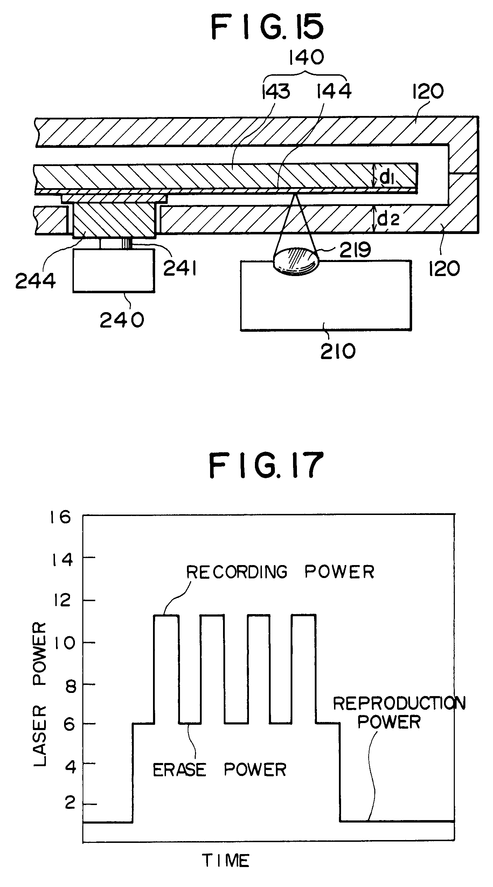

The optical-disk memory unit 100 includes, for example, the optical disk 140 and the transparent protective case or envelope 120 as shown in a plan view and a sectional view respectively depicted in Figs. 7(a) and 7(b), and it is detachably inserted into the optical disk memory apparatus 200. As seen from Figs. 7(a) and 7(b), the optical-disk memory unit 100 of this embodiment has the optical disk 140 housed in the card size protective case 120 , thereby constituting the optical disk in-card. Here, the feature of this optical disk in-card 100 is that the light beam window or incidence part 152, at least, of the protective case 120 is covered with a transparent protective plate. By way of example, the optical disk 140 is constructed including a substrate 143 and a recording film 144 formed thereon as shown in Figs. 14 and 15 which will be referred to later.

With the prior-art optical disk memory, the door of a protective case is opened when projecting light, and the light is projected directly onto the substrate being an optical recording medium. Accordingly, dust invades the optical disk memory through the door for light incidence. As a countermeasure, therefore, the transparent substrate which is 1.2mm thick needs to be used. In contrast, with the optical disk in-card 100 employed in this embodiment, dust rarely adheres directly to the substrate 143 or the recording film 144 because the light beam window 152 is covered with the transparent protective plate. Accordingly, the substrate 143 for sustaining the recording film 144 need not have the thickness of 1.2mm. Moreover, in the optical disk in-card 100 in this embodiment, the supporting substrate 143 of the optical disk 140 is free to rotate within the transparent protective case 120. Therefore, the surface oscillations of the disk 140 become less than the space.

Referring now to Figs. 14 and 15, the concept of the optical disk in card will be described in more detail, together with the recording, reproducing and erasing operations of the optical disk.

In the recording/erasing mode, new information is recorded over old information in such a way that the power of the semiconductor laser 211 built into the optical head 210 is modulated between the erase power and the recording power as shown in Fig. 17. On the other hand, in the reproducing mode, the reflection factor of the optical disk 140 is read in such a way that the light beam of the semiconductor laser 211 is set at the comparatively low power level and is continuously projected. Here, the feature of the optical disk in-card 100 for use in the present invention consists in that the optical disk 140 is irradiated with the laser beam through the transparent protective case or envelope 120. Thus, according to the present invention, dust in the air rarely adheres to the substrate 143 or the recording film 144, and signals are rarely degraded by the dust. Besides, when the total of the thickness d2 of the transparent protective case 120 and the thickness dl of the substrate 143 is set at about 1.2mm, the substrate 1.2mm thick having previously been indispensable can be made thinner.

Likewise, as shown in Fig. 15 illustrative of another embodiment, when the thickness d2 of the transparent protective case 120 of the optical disk in-card 100 for use in the present invention is set at an appropriate value, light need not be projected from the side of the substrate 143, and a material having no light transmissibility can be used for the substrate 143. Besides, when the thickness d2 of the transparent protective case 120 is set at 1.2mm, the substrate 143 can be made of the material having no light transmissibility, with the specifications of the objective lens held as in the prior art.

In each of the embodiments shown in Figs. 14 and 15, the optical disk 140 is fixed to and rotated by the rotating shaft 241, and it is restrained by a disk keeping member 244 in order to ensure a stable rotation. In addition, the part of the protective case 120 other than the light window 152 may be either transparent or opaque.

As the optical disk which is well suited for realizing the present invention, it is possible to use any of a playback-only type optical recording medium such as a compact disk, an add-on type optical recording medium utilizing the formation of pits or the change of phases, and a rewrite type optical recording medium utilizing an optomagnetic effect or the change of phases. That is, any medium is usable as long as it can be subjected to the recording, reproduction and erasing by the laser beam.

With the playback-only type, by way of example, rugged parts are formed in the surface of a plastic member by a stamper, and the changes of a reflection factor owing to the rugged parts are read as information items.

The add-on type optical recording medium is made of an inorganic material based on Te or the like, or an organic material such as cyanine dye or naphthalocyanine dye. Further, the rewrite type optical recording medium can be made of a crystalline phase-amorphous phase change type recording material such as In-Sb-Te system, Ge-Sb-Te system, In-Se-Tl system or Sb-Te system, or an optomagnetic type recording material such as Tb-Fe-Co system or Gd-Fe-Co system.

Although the optical disk 140 for use in the optical disk memory apparatus in this embodiment has been exemplified as having the recording medium 144 on only one surface, the present invention is not restricted thereto. It is also possible to employ an optical disk of the type capable of recording on both its surfaces.

As shown in Fig. 12, according to this embodiment, in order to thin the whole structure of the optical disk memory apparatus, the optical disk 140 itself is thinned and is housed in the card-like transparent protective case 120. The optical disk in card 100 thus constructed prevents dust in the air from adhering to the optical disk 140 and suppresses the surface oscillations of the optical disk 140 to below the space between this disc and the case 120. Assuming this space to be, e. g., 0.2mm and the thickness of the protective case 120 to be, e. g., 0.5mm, the optical disk in card 100 can be set at a thickness of 2.0mm.

Since the optical disk in-card 100 has the space of 0.2mm, the objective lens 219 may have a working distance equal to 0.2mm in the vertical direction. Usually, the focal distance of a lens expresses a distance from the principal point thereof. The objective lens 219 employed in this embodiment has the thickness of lens glass from the principal point to the lens surface on the disk side, and this thickness is assumed to be 1mm. Meanwhile, in view of dimensions given as indicated in Fig. 12, a distance from the lens surface to the recording film 144 becomes approximately 1mm. Therefore, when this distance is added with the aforementioned glass thickness, the focal distance of the objective lens 219 becomes 2mm. Besides, assuming the NA (numerical aperture) of this objective lens 219 to be 0.5, the effective diameter thereof is evaluated to be 2mm. Considering that the objective lens 219 is moved for the tracking, the light beam entering this objective lens may have a diameter of about 2.5mm, and the total reflection mirror 217 may be about 3mm thick. The optical head holder 231 is made 1mm thick, and the optical head 210 and the optical disk in-card 100 are housed in the case 201 being 1mm thick with a space of 0.2mm held therebetween. Then, the whole optical disk memory apparatus can be constructed with a thickness of 10mm.

Moreover, a thin optical memory apparatus which is easy to handle can be realized in such a way that the optical disk 140 as described above is housed in a card-like case of credit card size and light is projected onto the disk through a transparent part formed in the case. Thus, it is possible to realize a small-sized memory apparatus whose memory capacity is as large as 30MB or more and can reach even 50MB.

Here, the effective diameter of the objective lens 219 has been exemplified as 2mm. As listed in Table 1 and Table 2 below, however, the objective lens diameter can be appropriately set within a range of 1 3.8mm, depending upon the space which intervenes between the protective case 120 and the optical disk 140 in the optical disk in-card 100. In addition, each of the thicknesses of the optical head holder 231 and the case 201 should appropriately be 2-3mm. Accordingly, the relationship between the height h of the optical disk memory apparatus and the effective diameter d of the objective lens 219 to be employed is expressed as shown in Fig. 13, and the whole optical disk memory apparatus can be made 6-15mm high.

The required focal distance of the objective lens 219 can be shortened by reducing the thickness of the substrate 143 of the disk 140 in the prior art.

Table 1

| Focal Distance Necessary for Objective Lens (Thickness of Objective Lens: Dimension from Principal Point to Lens Surface) | | | | |
|---|---|---|---|---|
| | Substrate of 0. 8mm | | Substrate of 0. 5mm | |
| | Surf. Osc. of 0.5mm | Surf. Osc. of 0.3mm | Surf. Osc. of 0.3mm | Surf. Osc. of 0.1mm |
| Thickness | (0.8)0.53 | 0.53 | 0.5)0.33 | 0.33 |
| Thick. of Obj. Lens | 1.0 | 1.0 | 1.0 | 1.0 |
| Surface Oscillat. | (±0.5)1.0 | (±0.3)0.6 | (±0.3)0.6 | ( + 0.1) 0.2 |
| Allowance | 0.2 | 0.2 | 0.1 | 0.1 |
| Focal Distance | 2.73 | 2.33 | 2.03 | 1.63 |
| Effective Dia. of obj. Lens | 2.73 | 2.33 | 2.03 | 1.63 |

Table 2

| Focal Distance Necessary for Objective Lens (Thickness of Objective Lens: Dimension from Principal Point to Lens Surface) | | | | |
|---|---|---|---|---|
| | Substrate left intact at | | Thickness of 1.2mm | |
| | Surf. Osc. of 0.9mm | Surf. Osc. of 0.7mm | Surf. Osc. of 0.5mm | Surf. Osc. of 0.3mm |
| Thickness of Sub. | (1.2)0.8 | 0.8 | 0.8 | 0.8 |
| Thick. of Obj. Lens | 1.0 | 1.0 | 1.0 | 1.0 |
| Surface Oscillat. | (±0.9)1.8 | (±0.7)1.4 | (±0.5)1.0 | (±0.3)0.6 |
| Allowance | 0.2 | 0.2 | 0.2 | 0.2 |
| Focal Distance | 3.8 | 3.4 | 3.0 | 2.6 |
| Effective Dia. of Obj. Lens | 3.8 | 3.4 | 3.0 | 2.6 |

In this embodiment, the optical disk 140 is rotatably located in the case or envelope 120 having the transparent part 152, whereby the surface oscillations of the disk are suppressed to below the space or gap defined within the case. In addition, the dynamic working distance of the objective lens actuator 350 driving the objective lens 219 is limited to be less than the surface oscillations of the disk. When the surface oscillations of the disk are great, the dynamic working distance required for the actuator 350 increases, but this dynamic working distance forms part of the focal distance required for the objective lens 219. In this regard, when the focusing servo control has failed to hold the objective lens 219 at a fixed distance on account of the surface oscillations of the disk, the disk must be searched for. At this time, a relative distance needs to be held in order that, even when the detection of the disk has erred, the objective lens 219 may be prevented from coming into contact with the optical disk 140. It is therefore very effective to suppress the surface oscillations of the optical disk 140.

As to the relationship between the surface oscillations of the disk and the focal distance of the objective lens, Table 1 shows examples in the case where the substrate of the disk is set at thicknesses of 0.8mm and 0.5mm. Of course, any other substrate thickness may well be set. On this occasion, an equivalent optical path length (in the table, the thickness of the substrate) which is obtained by calculating the thickness of the substrate in terms of air becomes different. Table 2 shows examples in the case where the thickness of the substrate of the disk is set at 1.2mm.

It is understood from the tables that the distance between the recording surface of the disk and the objective lens shortens, so even when the focal distance is shortened, the focusing control can be performed following up the surface oscillations of the disk. In agreement with the focal distance, the effective diameter of the objective lens can be reduced from 4mm or above which is set in the prior art, down to 3.8mm 1mm, and the numerical aperture NA can be set at 0.5-0.55 as in the prior art. By way of example, in a case where the effective diameter of the objective lens is set at 2mm, the focal distance is also set at 2mm. Thus, it is possible to realize an optical system in which the spot diameter of the light beam can be refined to about 1.6$\mu$m.

In this manner, according to this embodiment, the light beam entering the objective lens 219 is refined to around 4mm-1.8mm, and the dimensions of the whole optical system can be consequently reduced, so that the optical head 210 can be made thinner in structure and reduced in size. In the case where the effective diameter of the objective lens 219 is set at, for example, 2mm, that of the collimating lens 212 can be reduced down to, for example, 2.5mm. This is based on the fact that, since the objective lens 219 is moved in the radial direction of the disk 140 in order to perform the tracking control, the light beam having a diameter greater than the effective diameter of the objective lens 219 is required, so the effective diameter of the collimating lens 212 is enlarged in correspondence with the greater diameter of the light beam.

The collimating lens 212 has its effective diameter made smaller and its focal distance made shorter than in the prior art. This is intended to receive the diffusing light of the semiconductor laser 211 to the same extent as in the prior art by means of the collimating lens 212 of reduced diameter, and to prevent the lowering of the utilization factor of the light of the semiconductor laser 211.

Meanwhile, when the focal distance of the collimating lens 212 is short, the relative positioning and optic axis adjustment between the semiconductor laser 211 and the collimating lens 212 become difficult. In this embodiment, the optical elements of the beam shaping prism 216, polarizing beam splitter 213, total reflection mirror 217 and quarter-wave plate 215 are unitarily formed. Further, in this embodiment, the reduced size is realized by the unitary construction in which the semiconductor laser 211 and the photodetector 221 are disposed on the identical side, and by the arrangement which prevents interference between the rotating disk 140 and the optical system.

Moreover, it is possible to unitarily construct the detecting lens 220, Foucault prism 230 and photodetector 221 which constitute the detecting system for detecting the reflected light of the optical disk 140. With the unitary construction, when the collimated light beam has entered the detecting lens 220, the condensed light spot can be formed on the photodetector 221 so as to detect the error signals of the focusing and tracking controls. The unitary detecting system is located on the detection side of the compound prism 232. Even the detecting system whose positioning becomes difficult when the whole optical system is reduced in size, can be readily positioned owing to the collimated beam on the detection side of the compound prism 232 and the unitary formation of the photodetector 221. Thus, the optical system has its accuracy increased and can have its optic axis adjusted with ease, so that the inclination of the optic axis can be adjusted by only small amounts.

As stated above, the optical head 210 can be made thinner in structure by the construction of the optical disk in card 100 in which the surface oscillations of the disk 140 are suppressed to the predetermined value or less.

Next, the operation of the optical disk memory apparatus of the present invention will be described with reference to the drawings. The optical head in the optical disk memory apparatus of this embodiment detects the focused point of the light beam by the use of the knife edge method.

Referring to Figs. 5(a) and 5(b) and Fig. 6, a light beam emitted from the semiconductor laser 211 is collimated by the collimating lens 212 into a collimated beam (hereinbelow, termed the "light beam LB"). Thereafter, the light beam LB enters the shaping prism 216. The light beam LB delivered from the collimating lens 212 is a beam in an elliptic pattern, but it has its optic axis curved by the shaping prism 216, thereby being shaped into a substantially circular beam. Subsequently, the shaped beam proceeds to the polarizing beam splitter 213. The emission light of the semiconductor laser 211 is a linear polarization and is set to become a P wave with respect to the polarizing beam splitter 213, so that the light beam having entered the polarizing beam splitter 213 is transmitted therethrough. The transmitted light beam is polarized into a circular polarization by the quarter wave plate 215. Further, the light beam is curved into the vertical direction by the total reflection mirror 217. Subsequently, the light beam LB of the circular polarization is condensed by the objective lens 219 so as to fall on the recording film 144 of the optical disk 140 within the optical disk in-card 100.

Reflected light from a spot focused on the optical disk 140 is turned into a collimated beam by the objective lens 219. Thereafter, the collimated beam has its optical path altered by the total reflection mirror 217 and is polarized into an S wave by the quarter-wave plate 215. The light beam LB of the S wave is reflected by the polarizing beam splitter 213, thereby having its optical path directed to the Foucault prism 230 as illustrated in Fig. 6. Approximately half of the light beam LB has its direction changed by the Foucault prism 230 forming a knife edge, whereupon it is focused by the detecting lens 220 onto that photodetector element for the tracking servo control which includes bisected photosensitive faces 221Ta and 221Tb. The other part of the light beam LB is subjected to the action of the end of the Foucault prism 230 as a knife edge, and is focused on that photodetector element for the focusing servo control which includes photosensitive faces 221Fa and 221Fb bisected vertically.

The detection voltages of the photosensitive faces 221Fa and 221Fb change in correspondence with the relative distance of the objective lens 219 and the disk 140. The signal representing the difference between the detection voltage shall be called the "focusing error signal" hereinafter. On condition that the disk 140 lies in the vicinity of the focal distance of the objective lens 219, the magnitude of the focusing error signal is proportional to the relative distance of the disk 140 and the objective lens 219, and the sign thereof is inverted before and behind the focal distance. Therefore, the autofocusing is done in such a way that, after the relative distance of the objective lens 219 and the disk 140 has come into the vicinal region, the focusing error signal is fed back to an unshown servo circuit.

On the other hand, approximately half of the light beam diverted by the Foucault prism 230 is focused onto the photosensitive faces 221Ta and 221Tb of the photodetector element for the tracking servo control which are bisected in the tracking direction. Likewise to the focusing error signal, the difference between the detection voltages of the faces 221Ta and 221Tb is detected as a positional error from a preset guide groove in the radial direction of the disk 140. This will be called the "tracking error signal". The tracking is done by feeding the tracking error signal back to an unshown servo circuit. Owing to this tracking control and the autofocusing control stated before, the laser beam refined into the spot diameter of about 1mm is projected onto each of the tracks having the pitch of 1.6$\mu$m as explained before, in regard of the optical disk 140 which undergoes displacements in excess of several tens of $\mu$m. A reproduced signal is obtained by adding up the signals of the photodetector elements having the photosensitive faces 221Ta, 221Tb, 221Fa and 221Fb.

Next, the principle and operation of the actuator for driving the optical head will be explained with reference to an example shown in Figs. 18 and 19. By the way, the actuator depicted in Fig. 18 is structurally different from the head actuator 310 in the foregoing embodiment, but the principle and operation of the former are common to those of the latter.

Fig. 18 is a perspective view of one embodiment of the actuator for driving the optical head. The optical head 5 is held between a movable element M and a stator S. The movable element M is comprised of a movable yoke 4, and permanent magnets 3R and 3L which are formed on the yoke 4 with magnet rows having N-poles and S-poles arrayed at equal pitches Tp. The stator S which is disposed with an air gap defined between it and the movable element M, is comprised of an A-phase stator pole 1A round which an A-phase coil 2A is wound, and a B-phase stator pole 1B round which a B-phase coil (not shown) is wound with a phase shift equal to 1/4 of the pitch Tp relative to the A phase stator pole 1A.

The permanent magnets 3R and 3L have their poles arrayed conversely so as to establish closed magnetic circuits together with the movable yoke 4 and the stator poles 1A, 1B of individual phases. By way of example, the A phase stator pole 1A in Fig. 18 is confronted by the N pole on the side of the permanent magnet 3R and the S-pole on the side of the permanent magnet 3L, so that a magnetic flux passes clockwise as viewed in the figure.

In addition, although not shown, a linear guide permits the stator S and the movable element M to move smoothly in a moving direction (indicated by a double-headed arrow in Fig. 18) while holding the predetermined air gap therebetween.

Owing to such a construction, the interlinking flux $\phi$A of the A-phase coil 2A varies sinusoidally versus the position x of the movable element M, while the interlinking flux $\phi$B of the B-phase coil 2B (not shown) varies sinusoidally with the phase shift of the 1/4 pitch namely, 90° relative to the magnetic flux $\phi$A.

Fig. 19 is a diagram showing the variations of several physical quantities versus the displacement of the movable element in order to explain the operation of the actuator in this embodiment.

15

The coil interlinkage fluxes $\phi A$, $\phi B$ vary sinusoidally as stated before, and they are respectively expressed by the following formulae:

$$\phi A = \phi \sin 2\pi \, x/Tp$$
$$\phi B = -\phi \cos 2\pi \, x/Tp \qquad (1)$$

The induced voltages eA, eB of the respective phases are:

$$eA = d\phi A/dt = d\phi A/dx \cdot dx/dt$$
$$eB = d\phi B/dt = d\phi B/dx \cdot dx/dt \qquad (2)$$

Accordingly, they are expressed as follows by substituting the corresponding formulae (1):

$$eA = 2\pi/Tp \cdot \phi \cos 2\pi/Tp \cdot x \cdot v$$
$$eB = 2\pi/Tp \cdot \phi \sin 2\pi/Tp \cdot x \cdot v \qquad (3)$$

Letting I denote a current, thrusts fA, fB become:

$$fA = eA \cdot I/v = 2\pi/Tp \cdot \phi \cos 2\pi/Tp \cdot x \cdot I$$
$$fB = eB \cdot I/v = 2\pi/Tp \cdot \phi \sin 2\pi/Tp \cdot x \cdot I \qquad (4)$$

Now, as indicated in Fig. 19, the following currents are caused to flow:

$$IA = I \cos 2\pi/Tp \cdot x$$
$$IB = I \sin 2\pi/Tp \cdot x \qquad (5)$$

Then, the sum $\underline{f}$ of the thrusts generated in the A phase and B phase becomes:

$$f = 2\pi/Tp \cdot \phi \, (\cos^2 2\pi \, /Tp \, x \, + \, \sin^2 2\pi \, T/Tp \, x \,) \, I$$
$$\therefore f = 2\pi/Tp \cdot \phi \cdot I \qquad (6)$$

Accordingly, when the sinusoidal currents IA and IB versus the movable element displacement $\underline{x}$ as illustrated in Fig. 19 are respectively passed in the A phase and B phase, the thrust $\underline{f}$ to develop becomes the fixed value, and the movable element M can be smoothly driven. In addition, since the thrust $\overline{f}$ to develop is inversely proportional to the number of the pitch Tp as indicated by Formula (6), it can be enlarged even with the same rating by decreasing the pitch Tp. Therefore, the construction of the embodiment is suited to reduce the size of the actuator.

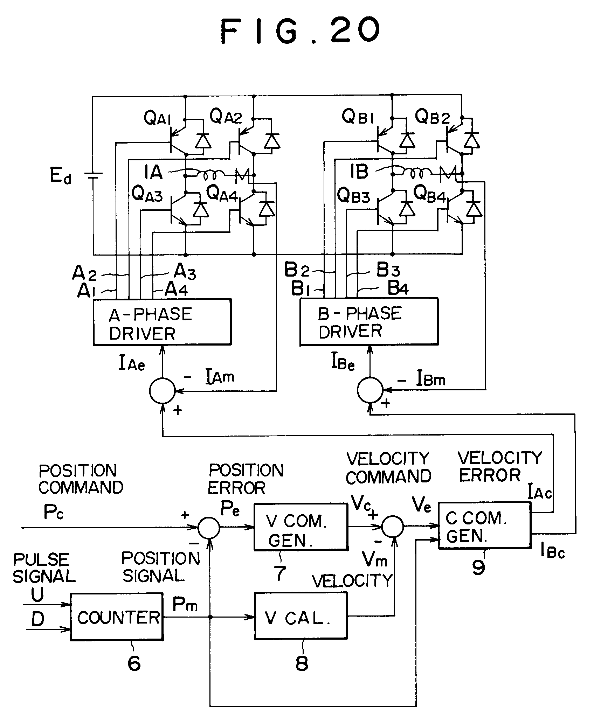

Fig. 20 is a diagram of the control blocks of the actuator in this embodiment.

The system is supplied with a position command Pc for moving the optical head 210 to a target track on the disk 140, and a pulse signal from the unshown encoder of the actuator or a pulse signal from a track on the disk.

There are two types of pulse signal. Namely, an up pulse signal U and a down pulse signal D which depend upon the moving directions of the actuator. The pulse signals are input to a counter 6, from which a position signal Pm is output. When one up pulse U is input, one pulse is added to the position signal Pm, whereas when one down pulse D is input, one pulse is subtracted from the position signal Pm.

The position command Pc and the position signal Pm are compared, and the resulting difference is input to a velocity command generator circuit 7 as a position error Pe (= Pc-Pm). Thus, a velocity command Vc corresponding to the position error Pe is output from the circuit 7.

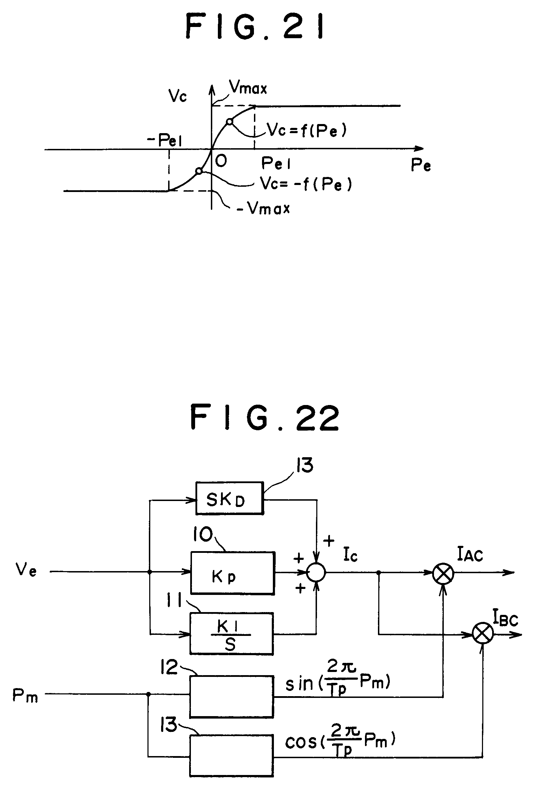

Fig. 21 is a diagram showing the pattern of the velocity command Vc versus the position error Pe in this embodiment. As seen from the figure, in the case where the position error Pe is greater than a certain value Pel or smaller than Pel, the velocity command generator 7 delivers the maximum velocity Vmax or the maximum velocity-Vmax in the opposite direction, respectively. In the case where the position error Pe is smaller than the certain value Pel or greater than-Pel, the circuit 7 delivers the velocity command Vc in accordance with a predetermined function f(Pe) (for Pe > 0) or - f(Pe) (for Pe < 0), respectively. In a case where the position error Pe is null, Vc = 0 is output.

The position signal Pm is input to a velocity calculation circuit 8, which delivers a velocity Vm being the differential output of this position signal. The velocity command Vc and the velocity Vm are compared, and the resulting difference becomes a velocity error Ve.

The velocity error Ve and the position signal Pm are input to a current command generator circuit 9, from which respective current commands IAC and IBC for the A phase and B-phase are output.

Fig. 22 shows a detailed block diagram of the current command generator circuit 9 in this embodiment.

The velocity error Ve is subjected to a proportional action at a proportional gain Kp by a proportion unit 10, an integral action at an integral gain KI by an integral unit 11, and a derivative action at a derivative gain KD by a derivative unit 13. Thus, a current amplitude command IC is generated. Owing to the proportional plus-integral-plus derivative action, the current amplitude command IC is controlled so that the velocity error Ve may become null quickly. The position signal Pm is impressed on a sinusoidal wave circuit 12 to produce a sinusoidal signal sin 2T/Tp Pm for the A-phase coil, and on a sinusoidal wave circuit 13 to produce a sinusoidal signal COS $2\pi$T/Tp Pm for the B-phase coil. The sinusoidal signals are respectively multiplied by the above current amplitude command IC, thereby generating the A-phase current command IAC and the B-phase current command IBC. Accordingly, the A phase current command IAC and the B-phase current command IBC are expressed by:

$$IAC = IC \sin (2\pi/Tp\ Pm)$$
$$IBC = IC \cos (2\pi/Tp\ Pm) \qquad (7)$$

In this way, the sinusoidal currents corresponding to the displacement of the movable element of the actuator as given by Formulae (5) can be passed.

Referring back to Fig. 20, the A-phase current command IAC and the B-phase current command IBC are respectively compared with an A-phase current command IAm and a B-phase current command IBm detected by current sensors for the coils of the individual phases. The resulting differences are respectively input to an A-phase driver and a B phase driver as an A-phase current command IAe and a B-phase current command IBe.

Likewise to the current command generator circuit shown in Fig. 22, the driver of each phase subjects the current error to a proportional action, an integral action and a derivative action. As a result, it determines a duty ratio d for rendering the current error null and a pair of transistors for passing currents, namely, transistors QĀ1 and QA4 or QA2 and AA3 in the A-phase or transistors QB1 and QB4 or QB2 and AB3 in the B-phase.

Owing to such a construction and operation, the currents as illustrated in Fig. 19 can be caused to flow through the coils of the respective phases, thereby generating the fixed thrust in the actuator.

The actuator is consequently moved until the position signal Pm comes into agreement with the position command Pc. Then, the velocity command Vc becomes null, and the velocity Vm of the actuator agrees with the velocity command Vc. Therefore, the actuator is stopped at the position conforming to the position command Pc.

According to this embodiment, the optical head can be quickly moved to the desired position by the actuator of comparatively small size. This has the effect that the optical head can be made thinner in structure.

In this embodiment, the current control is performed in such a way that the transistors QA1-QB4 are operated in their saturated regions to turn ON/OFF and to control the duty ratios thereof. However, a similar actuator operation is possible even with a so called analog operation wherein the transistors QA1-QB4 are operated in their unsaturated regions to control the base currents thereof.

On this occasion, although the efficiency of the control circuit is lowered, the switching noise of the transistors is reduced.

Besides, the gains of the proportional, integral and derivative actions can be selected at will, depending upon the use of the optical head. Any of them can be sometimes set at zero.

Now, another embodiment of the present invention will be described with reference to the drawings.

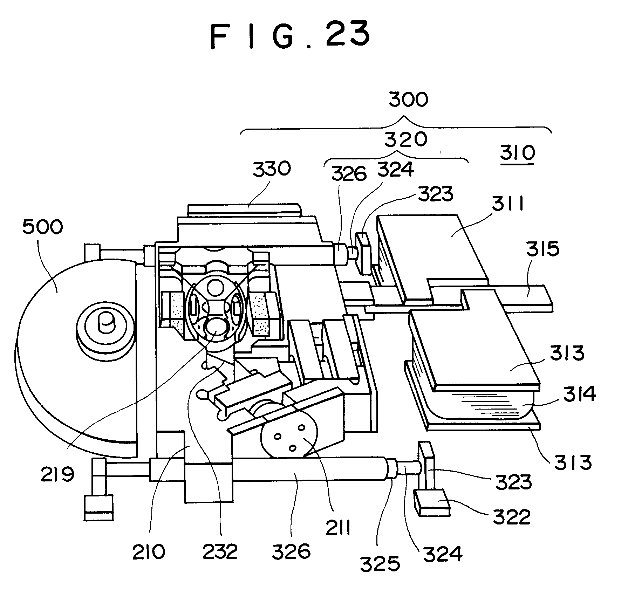

The optical disk memory apparatus of the embodiment shown in Fig. 23 comprises a spindle motor 500, an optical head 210, and head displacement means 300. The optical head 210 and the head displacement means 300 are substantially the same as in the foregoing embodiment shown in Fig. 1. Although, in Fig. 23, the stator of the head displacement means 300 is depicted schematically, the details thereof are such that magnetic poles corresponding to the A phase stator pole 1A and B phase stator pole 1B shown in Fig. 18 are arrayed at equal pitches in large numbers. This embodiment features that the spindle motor 500 has a substantially semicircular structure. Accordingly, the featuring point shall be chiefly described here.

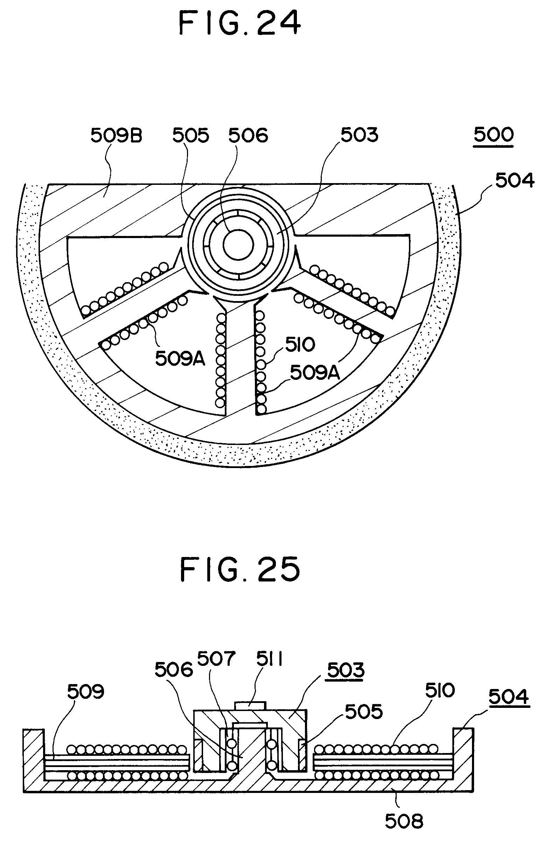

As shown in Figs. 24 and 25, the spindle motor 500 includes a rotor 503 and a stator 504. The rotor 503 is comprised of a permanent magnet 505 in which N-poles and S-poles are circumferentially arranged at substantially equal pitches, and a rotor yoke 506 which constitutes a magnetic circuit on the side of the rotor 503.

On the other hand, the stator 504 is comprised of a case 508, a stator core 509 and a coil 510, and it supports the rotor 503 through a bearing 507 so as to be rotatable.

Here, the feature of the motor 500 in this embodiment is that the shape is such that which a distance from the center to the outer circumference of the stator core 509 differs versus an angular position. Fig. 24 illustrates such a shape, a case where part of a circle is rectilinearly cut away. In general, however, the stator core 509 may be in any of the shapes of a circular arc, a curve, etc. as viewed in plan, or the shapes may well be defined in two or more places on the outer circumference of the stator core 509.

Referring to Fig. 24, the permanent magnet 505 of the rotor 503 is so constructed that eight N- and S-poles are arranged at substantially equal pitches in the circumferential direction. The stator core 509 is comprised of magnetic poles 509A having the coil 510, and a magnetic pole 509B not having the coil 510. The magnetic pole 509A having the coil 510 forms a so-called torque generating portion which positively generates a driving torque on the basis of the electromagnetic force between a current flowing through the coil 510 and the permanent magnet 505 of the rotor 503. In contrast, the magnetic pole 509B not having the coil 510 generates no positive torque between itself and the rotor 503, and it forms a so called torque non generating portion. The functions of the magnetic pole 509B forming the so-called torque non-generating portion are to prevent the external leakage of magnetic fluxes established by the coil 510 and the permanent magnet 505 of the rotor 503 (this function is important particularly in a spindle motor for driving a magnetic disk), and to relieve the cogging torque between the stator core 509 and the permanent magnet 505 of the rotor 503.

In Fig. 24, a brushless motor of three phases is exemplified. Accordingly, the magnetic poles 509A which have the coil 510 serving as the driving elements of the torque generating portions are three in number, and they generate the torques between themselves and the opposing four poles of the permanent magnet 505 of the rotor 503. It is often utilized in a smallsized motor for the relief of the cogging torque that the number of the magnetic poles of an electromagnet assembly and the number of the magnetic poles of the permanent magnet are set at the ratio of 3 : 4 in the three-phase motor. Alternatively, an occasion where the ratio is, e. g., 3 : 2 is utilized. An example on this occasion is such that the stator 504 is quite the same as shown in Fig. 24, and that only the permanent magnet 505 is altered into a four-pole structure.

In addition, the case 504 of the motor 500 is made semicircular as depicted in Fig. 24, in conformity with the shape of the stator core 509.

As seen from Fig. 25, this embodiment has a direct drive scheme in which an optical disk is fitted onto a rotating shaft 511 located at the top of the rotor 503 (though a fitting structure is omitted from the illustration) and is directly driven by the spindle motor 500.

In the optical disk memory apparatus shown in Fig. 23, on the side of those angles of the spindle motor 500 at which the outer diameters thereof are small, the optical head 210 and a head actuator 310 are arranged in this order. Accordingly, a distance which the optical head 210 is moved in the radial direction of the surface of the disk can be lengthened in such a way that the optical head 210 and the head actuator 310 are arranged on the outer peripheral side of the magnetic pole 509B which is the torque non generating portion in the stator core 509. Moreover, the effective area of the disk can be enlarged to heighten the recording density (the quantity of information/the surface area of the disk) and to render the disk memory apparatus smaller in size, lighter in weight and thinner in structure.

The shape of the spindle motor 500, forms a keypoint how short the distance from the center of the motor to the position of the minimum outer diameter of this motor can be set. In the case of Fig. 24, it determines how small the radial length, namely, the thickness of a bridge part at the center of the stator pole 509B not having the coil 510 can be set. However, when the thickness of the bridge is made too small, a cogging torque might develop due to magnetic saturation. It is therefore desirable to set the minimum thickness at which a magnetic flux to interlink the bridge is not saturated. A motor construction which permits the bridge to be made thinner while still fulfilling this condition, needs to have a multipolar structure, which should desirably be configured of eight or more poles. The the upper limit of the thickness of the bridge should desirably be 2mm or less.

In other words, the effects stated above can be enhanced more by making great the ratio between the length from the center of the spindle motor 500 to the large outer diameter part thereof and the length from the same to the small outer diameter part thereof. In the example of Fig. 24, the aforementioned ratio is set to be greater than 3 : 1.

Incidentally, the spindle motor 500 is fed by an unshown controller with a motor current corresponding to a velocity signal delivered from a velocity sensor (not shown) mounted in this spindle motor. Thus, it is controlled so as to be driven and rotated at a constant velocity.

Next, another embodiment of the optical head 210 applicable to the optical disk memory apparatus of the present invention will be described. This embodiment is an example of application to a playback only type optical disk memory apparatus.

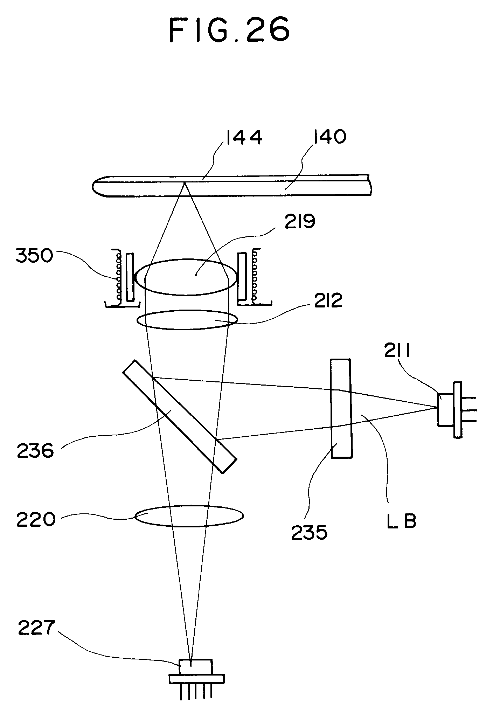

Fig. 26 shows the optical paths of the optical system of the optical head in this embodiment. In the figure, a beam raising mirror of total reflection is omitted from illustration for the brevity of the drawing. In actuality, the total reflection mirror is arranged between a collimating lens 212 and an objective lens 219.

A laser beam LB emitted from a semiconductor laser as a light source 211 is split into three beams for tracking by a diffraction grating 235. The split beams are reflected by a semitransparent mirror 236, and are turned into a collimated beam by the collimating lens 212. Until the split beams reach the collimating lens 212, the emitted beam and these split beams proceed in parallel with an optical recording medium (optical disk) 140. Subsequently, the collimated beam is reflected into a direction normal to the plane of the optical recording medium 140 by the unshown total reflection mirror, thereby entering the objective lens 219. It is condensed on the recording film 144 of the optical recording medium 140 by the objective lens 219. The recording film 144 bears information in the form of ruggedness formed by a stamper or the like. The laser beam LB reflected by the recording film 144 retrocedes via the objective lens 219 as well as the collimating lens 212, whereupon it is transmitted through the semitransparent mirror 236 and is focused on a photodetector 227 by a detecting lens 220. A photodiode having a hexamerous photosensitive face is employed as the photodetector 227.

In such an optical system, any of the astigmatism method, the knife edge method, etc. can be employed for detecting a focusing error, and the two dimensional actuator 350 shown in Figs. 4(a) and 4(b) is used for the tracking control.

Since the optical disk memory apparatus in this embodiment is of the playback-only type, the optical system of this optical head 210 may be low in the efficiency of utilization of beam energy. Accordingly, it has the smaller number of components as compared with the optical system of the optical head capable of recording as shown in Fig. 1, and it features that a reduced size and a lightened weight are possible.

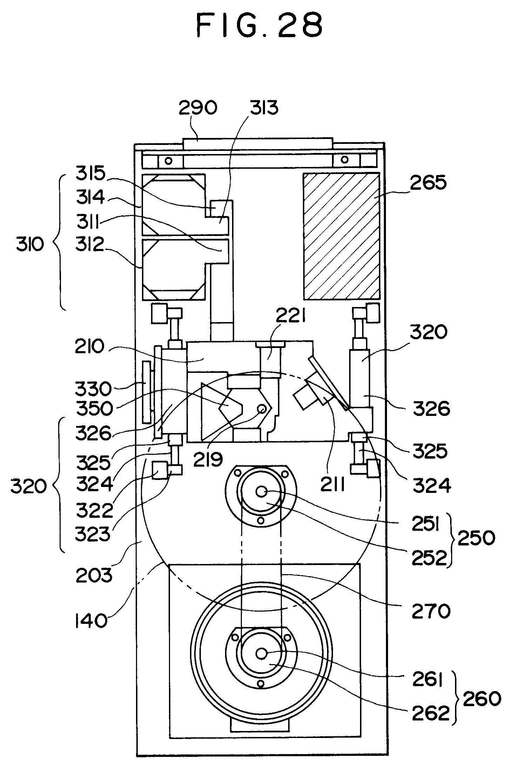

The foregoing embodiments resort to the direct drive method wherein the rotation of the optical disk is directly driven by the rotating shaft of the motor, but the present invention is not restricted thereto. The belt drive method, for example, can alternatively be employed. With this method, as shown in Fig. 28 by way of example, a rotating shaft 251 and a pulley 252 which serve as a rotating mechanism 250 are disposed at the position of the motor in each of the foregoing embodiments. On the other hand, a motor 260 is disposed at another position, and a pulley 262 is mounted round a rotating shaft 261 in the motor 260. Thus, the rotation of the motor 260 is transmitted to the rotating mechanism 250 through the pulley 262, a belt 270 and the pulley 252, thereby to rotate the optical disk 140. The advantage of this method is that the optical head 210 is permitted to approach the inner periphery of the optical disk 140 more by making the size of the pulley 252 smaller, so the recording region of the disk can be expanded toward the inner periphery to some extent.

Incidentally, the example shown in Fig. 28 has a construction in which two stators constituting head displacement means are juxtaposed in the displacement direction of the optical head 210.

Besides, in the foregoing embodiments, the motor, optical head, head displacement means, etc. are received in the case, but the present invention is not restricted to the reception in the case. By way of example, these elements can also be arranged on a common base plate, which is then built in a laptop type computer. Alternatively, these elements may well be installed in the housing of a computer so as to be arranged with reference to, or on, a virtual common plane.

Further, in the foregoing embodiments, the optical disk memory apparatus employing the detachable optical disk memory unit is exemplified. Needless to say, however, the present invention is not restricted to the exemplified memory, but it is also applicable to an optical disk memory having a fixed optical disk. Similarly, the invention is also applicable to an optical disk memory apparatus which is built in a computer system.

As described above, according to the present invention, a mechanism for rotating an optical disk, an optical head, and means for displacing the optical head are optimally arranged without involving a complicated structure, thereby providing an optical disk memory apparatus which is reduced in size, especially thinned in structure.

Moreover, a mechanism for rotating an optical disk, an optical head, and means for displacing the optical head are optimally arranged, thereby providing an optical disk memory apparatus which is capable of quick and precise positioning.

According to the present invention, an optical disk in-card memory of thin structure and large memory capacity can be used. This makes it possible to realize a laptop type computer or a large capacity still camera having the memory of thin structure and large memory capacity, or a portable type individual database for medical care having the memory of large memory capacity.

**Claims**

1. An optical disk memory apparatus comprising, at least, a disk rotating mechanism (240) which drives and rotates an optical disk (140) set in said memory apparatus, an optical head (210) which projects a light beam onto said optical disk and which detects reflected light from said optical disk, and head displacement means (300) including an actuator (310) for displacing said optical head (210);
   wherein the disk rotating mechanism (240), the optical head (210) and the head displacement means (300) are arranged along a common plane, and said actuator (310) is arranged at the rear of said optical head (210) with respect to a rotating shaft (241) of said disk rotating mechanism (240).

2. An apparatus according to Claim 1, wherein said common plane is a virtual plane of rotation of the optical disk (140) to be set.

3. An apparatus according to Claim 1, wherein said common plane is formed by a base (203), on which said disk rotating mechanism (240), said optical head (210) and said head displacement means (300) are arranged.

4. An apparatus according to Claim 3, further comprising a case (201, 203) which receives said disk rotating mechanism (240), said optical head (210) and said head displacement means (300) therein, and whose base is said base (203) serving as said common plane.

5. An apparatus according to one of the Claims 1 to 4, wherein said disk rotating mechanism (240), said optical head (210) and said head displacement means (300) are arrayed in a vacant space whose height is a length of said disk rotating mechanism (240) in a direction of said rotating shaft (241).

6. An apparatus as defined in Claim 4, wherein said case (201, 203) is formed with a slot in which an optical-disk memory unit (100, 120, 140) can be detachably set, said optical-disk memory unit encasing said optical disk (140) in an envelope (100, 120) that is transparent at, at least, a light incidence part thereof.

7. An apparatus according to one of the Claims 1 to 6, wherein said optical head (210) includes an objective lens (219) at a position at which it confronts the set optical disk (140), and said actuator (310) functions to drive and displace said optical head (210) so that said objective lens (219) may move in a radial direction of said optical disk (140).

8. An apparatus according to one of the Claims 1, 2 or 3, further comprising a slot in which an optical-disk memory unit (100, 120, 140) can be detachably set, said optical-disk memory unit encasing said optical disk (140) in an envelope (100, 120) that is transparent at, at least, a light incidence part thereof, said optical disk including a transparent substrate (143) and a recording film (144);
   wherein said optical head (210) includes an objective lens (219) at a position at which it confronts the set optical disk (140), and said objective lens has a focal distance with which a sum between a permissible displacement range of said objective lens (219) and a total of a thickness ($d_1$) of said transparent substrate (143) of said set optical disk (140) and a thickness ($d_2$) of said light incidence part of said envelope (100, 120) becomes substantially equal to a distance from a front surface of said objective lens (219) to a focusing position of said light beam.

9. An apparatus according to claim 8, wherein said slot can set therein said optical-disk memory unit (100, 120, 140) in which the total of the thickness ($d_1$) of said transparent substrate (143) of said set optical disk (140) and the thickness ($d_2$) of said light incidence part of said envelope (100, 120) is, at most, 1.2 mm.

10. An apparatus according to Claim 8 or 9, wherein said slot can set therein said optical-disk memory unit (100, 120, 140) which encases said optical disk (140) in said envelope (100, 120) of card size.

11. An apparatus according to one of the Claims 7 to 10, wherein said optical head (210) includes an

20

optical system which is located at a stage preceding said objective lens (219) and which serves to enter a collimated beam into said objective lens (219), and a holder (231) which supports said optical system, and wherein said optical system preceding said objective lens (219) has sufficient height to be able to transmit the light beam which has a beam width greater than an effective diameter of said objective lens (219).

12. An apparatus according to Claim 11, wherein said optical head (210) has a height which is stipulated by a sum among the height of said optical system preceding said objective lens (219), a thickness of said objective lens (219), a permissible displacement width of said objective lens (219), and a thickness of said holder (231) for supporting said optical system.

13. An apparatus according to one of the Claims 8 to 12, wherein said actuator (310) functions to drive and displace said optical head (210) so that said objective lens (219) may move in a radial direction of said optical disk (140).

14. An apparatus according to one of the Claims 1 to 13, wherein said disk rotating mechanism (240) includes a motor which directly drives and rotates said optical disk (140), and said motor has an external shape which is smaller than that of said optical disk (140) to be driven and rotated.

15. An apparatus according to one of the Claims 1 to 13, wherein said disk rotating mechanism (240) includes a motor which directly drives and rotates said optical disk (140), and said motor is provided at its outer peripheral part with a portion whose distance from a center of said motor is shorter relative to a remaining portion of said outer peripheral part, said optical head (210) being arranged in adjacency to the shorter portion.

16. An apparatus according to one of the Claims 1 to 15, wherein said head displacement means (300) includes an optical head supporter (320) which supports said optical head (210) so as to be movable in a direction of a radius of rotation of said optical disk (140).

17. An apparatus according to one of the Claims 1 to 16, wherein said actuator (310) includes a movable element (315) which is rectilinearly displaceable, and a stator (311 - 314) which generates a moving magnetic field for rectilinearly displacing said movable element (315), and wherein said movable element (315) is connected with said optical head (210) so as to displace the latter in a radial direction of the set optical disk (140).

18. An apparatus according to one of the Claims 1 to 17, wherein said disk rotating mechanism (240) includes a rotating shaft (241) for rotating said optical disk, a motor for driving and rotating said rotating shaft, and means for transmitting the rotation of said motor to said rotating shaft, and wherein said motor is arranged at a position different from that of said optical head.

19. An optical disk memory apparatus comprising a case which is substantially in the shape of a rectangular parallelepiped as a whole, an optical head (210), a motor (240) which rotates an optical disk (140) set in said case, and an actuator (300) which displaces said optical head (210) in a radial direction of said optical disk (140); wherein said actuator (310) is arranged at the rear of said optical head (210) with respect to said motor (240).

20. An information processing apparatus comprising:
    an optical-disk memory unit (140) in which an optical recording medium (144) for at least one process among recording, reproduction and erasing of information is rotatably encased whithin an envelope (120) having a transparent part;
    an optical head (210) which includes a light source (211), an objective lens (219), a photodetector (227), and an optical system for guiding a light beam from said light source (211) to said objective lens (219) and for guiding reflected light having entered said objective lens (219) to said photodetector (227), and which irradiates said optical recording medium (144) with the light condensed by said objective lens (219), through said transparent part of said envelope (120), so as to execute said at least one process among recording the information on said optical recording medium, reproducing the information recorded on said optical recording medium (144), and erasing the information recorded on said optical recording medium; head displacement means (300) including an actuator (310) which

EP 0 497 291 A2

displaces said optical head (210);

disk rotation means (240, 250, 260) including a disk rotating mechanism which rotates said optical recording medium (144); and

a drive circuit (260) which controls the operation of said optical head (210) and a rotational frequency of said disk rotating mechanism (240);

wherein said disk rotating mechanism (240), said optical head (210) and said head displacement means (300) are arranged along a common plane, and said actuator (310) is arranged at the rear of said optical head (210) with respect to a rotating shaft (241) of said disk rotating mechanism (240).

21. An information processing apparatus comprising:

set means capable of detachably setting an optical disk memory unit in which an optical recording medium (144) for at least one process among recording, reproduction and erasing of information is rotatably encased within an envelope (120) having a transparent part;

an optical head (210) which includes a light source (211), an objective lens (219), a photodetector (227), and an optical system for guiding a light beam from said light source (211) to said objective lens (219) and for guiding reflected light having entered said objective lens (219) to said photodetector (227), and which irradiates said optical recording medium (144) with the light condensed by said objective lens (219), through said transparent part of said envelope (120), so as to execute said at least one process among recording the information on said optical recording medium, reproducing the information recorded on said optical recording medium (144), and erasing the information recorded on said optical recording medium;

head displacement means (300) including an actuator (310) which displaces said optical head (210);

disk rotation means (240, 250, 260) including a disk rotating mechanism which rotates said optical recording medium (144) contained in the set optical disk memory unit; and

a drive circuit (260) which controls the operation of said optical head (210) and a rotational frequency of said disk rotating mechanism (240);

wherein said disk rotating mechanism (240), said optical head (210) and said head displacement means (300) are arranged along a common plane, and said actuator (310) is arranged at the rear of said optical head (210) with respect to a rotating shaft (241) of said disk rotating mechanism (240).

22

# FIG. 1

# FIG. 2

241 242 240 210 315 310 313 290

203 320 314 313

EP 0 497 291 A2

# FIG.3

120 PROTECTIVE CASE

140 OPTICAL DISK

200

OPTICAL DISK MEMORY APPARATUS

120

140

210

300

OP HEAD

HEAD ACT

MTR

DRV CCT

240

260

202

100

201

400

COMPUTER

OUTPUT MEANS — 430

PROCESSOR — 410

INPUT MEANS — 420

EP 0 497 291 A2

# F I G. 4
## (a)

<u>350</u>

219    352    356    357    354    353    231

PLANE A—A′      PLANE B—B′

## (b)

219    A    A′    356    357    351    354    355    352    353    B    B′

# FIG. 5
## (a)

## (b)

# FIG. 6

# F I G. 7
## (a)

120

140

B

B

152

## (b)

140

120

120

# F I G. 8

# F I G. 9

# F I G. 1O

232b

# FIG. 11

232c(217)

# FIG. 12

201

SPACE : 0.2mm
SPACE : 0.1mm
SPACE : 0.1mm
SPACE : 0.1mm

0.5mm

0.5mm

120

140  OPTICAL DISK

219

OBJECTIVE LENS : 2mm

:0.3mm

217

TOTAL REFLECTION
MIRROR : 3mm

231

1mm

SPACE : 0.2mm

1mm

203

EP 0 497 291 A2

# FIG. 13

# FIG. 14

# F I G. 15

# F I G. 17

# FIG.16

EP 0 497 291 A2

# FIG. 18

MOVING DIRECTION

# FIG. 19

# F I G . 20

# F I G . 2 1

# F I G . 2 2

# F I G . 23

# FIG. 24

# FIG. 25

# FIG.26

# FIG.27

REC/REP SYSTEM

TRACK SIGNAL DETECT SYSTEM

FOCUS SIGNAL DETECT SYSTEM

OP SENSOR SYSTEM

EP 0 497 291 A2

# FIG. 28